# FASCICULE DE BREVET EUROPEEN

(11) **EP 4 188 866 B1**
(45) Date de publication et mention de la délivrance du brevet: **08.04.2026**
(21) Numéro de dépôt: 21754842.9
(22) Date de dépôt: 28.07.2021
(51) Int. Cl.: B66F 9/075, B66F 11/04, B66F 9/24, B60B 35/10, B60B 35/12, B62D 21/06, B62D 21/14, B60B 35/14

(54) **PROCÉDÉ DE DÉPLOIEMENT OU RÉTRACTATION DES ROUES D'UNE NACELLE ÉLÉVATRICE MONTÉES SUR DES BRAS PIVOTANTS**
VERFAHREN ZUM AUSFAHREN ODER EINZIEHEN DER RÄDER EINER HUBARBEITSBÜHNE AUF SCHWENKARMEN
METHOD FOR DEPLOYING OR RETRACTING THE WHEELS OF AN AERIAL WORK PLATFORM MOUNTED ON PIVOTING ARMS

(30) Priorité: 31.07.2020 FR 2008207
(43) Date de publication de la demande: 07.06.2023
(73) Titulaire: Haulotte Group, 42420 Lorette (FR)
(72) Inventeur: COLASSE, Arnaud, 69008 Lyon (FR); COGNET, Remy, 42320 La Grand-Croix (FR); DURO, Abel, 42152 L'Horme (FR)
(74) Mandataire: Reinhardt, Yves
(86) Numéro de dépôt international: PCT/IB2021/056848
(87) Numéro de publication internationale: WO 2022/023990

(56) Documents cités:
- EP-A1- 2 537 684
- US-A1- 2015 259 185

## Description

La présente invention concerne le domaine des plates-formes élévatrices mobiles de personnel (désignées aussi par l'acronyme PEMP, ou encore en anglais par *mobile elevating work platforms* et son abréviation *MEWP*), encore communément appelées nacelles élévatrices (ou en anglais *aerial work platforms* et son abréviation *AWP*).

Les nacelles élévatrices sont des machines destinées à permettre à une ou plusieurs personnes de travailler en hauteur. Pour cela, elles comprennent une plate-forme de travail prévue pour recevoir une ou plusieurs personnes. Elle est supportée par un mécanisme de levage qui permet de l'élever depuis une position abaissée sur le châssis de la nacelle élévatrice jusqu'à la position de travail souhaitée en hauteur. Les nacelles élévatrices peuvent être déplaçables au sol auquel cas elles sont pourvues de roues ou de chenilles à cette fin. Elles sont souvent automotrices, c'est-à-dire motorisées pour permettre leur déplacement autonome au sol. La plate-forme de travail est équipée d'un pupitre de commande muni d'organes de commande permettant à un opérateur d'actionner le mécanisme de levage et, le cas échéant, le déplacement de la nacelle élévatrice au sol.

L'invention concerne plus particulièrement les nacelles élévatrices à quatre roues, à savoir deux roues avant et deux roues arrière, qui permettent de déplacer la nacelle élévatrice au sol et dont l'écartement latéral - appelé communément la voie - est modifiable de manière à être plus large en position de travail et plus étroit pour le transport ou le déplacement sur route.

Un écartement latéral important des roues procure une stabilité accrue à la nacelle élévatrice lorsqu'elle est en position de travail, c'est-à-dire lorsque la plate-forme de travail est élevée grâce au mécanisme de levage à une position de travail souhaitée en hauteur. Cependant, un écartement latéral important des roues peut être incompatible avec le transport de la nacelle élévatrice sur un camion ou son déplacement sur route car il dépasse généralement les limites maximales pour le transport sur camion ou le déplacement sur route. Le fait que l'écartement latéral des roues soit modifiable de manière à être plus large en position de travail et plus étroit pour le transport ou le déplacement sur route permet de concilier ces deux considérations. Dans l'art antérieur, plusieurs technologies ont été proposées pour permettre de modifier l'écartement latéral des roues.

Selon une première technologie, chacune des roues est montées à une extrémité d'un bras télescopique respectif dont l'extrémité opposée est montée fixement au châssis de la nacelle élévatrice. Sous l'action de vérins, les bras télescopiques permettent de translater latéralement les roues respectives par rapport au châssis de la nacelle élévatrice, et donc de varier leur écartement latéral.

Cette première technologie a des limites en ce que la distance entre roues avant et roues arrière - appelée communément empattement - reste limitée par la taille du châssis. De plus, la modification de l'écartement des roues est fastidieuse car il faut soulever la nacelle élévatrice du sol au moyen de vérins dédiés à cet effet afin de libérer les roues du sol avant de faire varier leur écartement. De surcroît, les pattes d'appui au sol à l'extrémité des vérins peuvent s'enfoncer dans le sol sous le poids de la nacelle élévatrice dans le cas d'un sol meuble ou d'un revêtement de sol peu résistant.

Selon une deuxième technologie appelée dans le jargon « essieux en X », chacune des roues est montée à une extrémité d'un bras respectif dont l'extrémité opposée est montée de manière pivotante au châssis autour d'un axe vertical afin de pouvoir varier l'écartement latéral des roues. Un ou plusieurs vérins permettent de faire pivoter les bras entre la position déployée de travail et la position rétractée de transport. Cette technologie est illustrée notamment par US 7,198,278 B2, US 8, 888,122 B2 et CN106080833A. Par rapport à la technologie précédente, cette deuxième technologie permet d'augmenter l'empattement des roues car les bras de support des roues positionnent les roues avant et arrière à distance du châssis de la nacelle élévatrice en direction de l'avant et en direction de l'arrière respectivement. Cette deuxième technologie permet de ce fait d'accroître davantage la stabilité de la nacelle élévatrice, et donc d'atteindre des hauteurs de levage de la plate-forme de travail encore plus importantes.

Une difficulté de cette deuxième technologie réside également dans la manière de réaliser en pratique le pivotement des bras de support des roues afin de modifier l'écartement des roues. Différentes manières ont été proposées.

Une première manière est similaire à celle mentionnée à propos de la première technologie : elle consiste à soulever les roues du sol au moyen de vérins dédiés, préalablement au pivotement des bras de support des roues par le ou les vérins d'actionnement des bras. Cette première manière a donc les mêmes inconvénients que ceux déjà mentionnés pour cette première technologie.

Une variante consiste, en l'absence d'entrainement de la nacelle élévatrice en translation au sol comme précédemment, à faire pivoter les bras de support des roues, mais sans soulèvement préalable des roues du sol. Autrement dit, la nacelle élévatrice reste immobile sur place, au même endroit au sol, pendant le pivotement des bras de support des roues. Dans ce cas, les roues qui sont dans leur orientation sensiblement parallèle entre elles, frottent au sol lors du pivotement des bras de support des roues. Cela a pour inconvénient de solliciter fortement la gomme de leurs pneus et donc leur usure plus rapide, et aussi de risquer d'abimer le revêtement du sol ou de creuser un sillon dans celui-ci s'il s'agit d'un sol meuble. De plus, le ou les vérins d'actionnement des bras de support des roues doivent être plus puissants.

Une autre manière de réaliser le pivotement des bras de support des roues consiste à le réaliser pendant un déplacement en translation de la nacelle élévatrice au sol. Cette manière de faire limite la sollicitation des pneus et du sol comparativement au cas précédent, mais sans pour autant l'éliminer. Il a été proposé en outre d'orienter les roues avant, respectivement les roues arrière, en biais pour être selon le cas convergentes ou divergentes de manière à créer des efforts sur les roues favorisant le pivotement des bras de support des roues dans le sens souhaité. De ce fait, le ou les vérins d'actionnement des bras de support des roues peuvent être moins puissants, voire pourraient être omis d'après US 7,198,278 B2, néanmoins la sollicitation des pneus et du sol est accrue. En tout cas, cette manière de faire suppose que soit disponible suffisamment de place pour déplacer la nacelle élévatrice au sol sur la distance requise pour réaliser le pivotement des bras de support des roues, ce qui peut ne pas toujours être le cas. Elle impose aussi une vigilance accrue à l'opérateur de la nacelle élévatrice vis-à-vis de personnes se trouvant éventuellement dans la zone de déplacement au sol de la nacelle élévatrice pour des raisons évidentes de sécurité.

Au vu de ces inconvénients, il est souhaitable d'améliorer la manière de réaliser le pivotement des bras de support des roues. Un document ancien, FR 1 113 811, qui a été ignoré par la pratique dans le domaine des nacelles élévatrices, contient des enseignements concernant la manière de réaliser le pivotement des bras de support des roues. Ce document concerne un châssis de roulement, à écartement de voie variable, pour véhicules de tous genres, sur routes, sur terre et sur rails. Il divulgue en particulier un châssis de roulement similaire à la deuxième technologie mentionnée plus haut, c'est-à-dire avec quatre roues - ou similaires - montées à une extrémité d'un bras respectif dont l'extrémité opposée est montée de manière pivotante au châssis afin de pouvoir varier l'écartement latéral des roues.

Quant à la manière de faire pivoter les bras de support des roues, il propose, entre autres possibilités, de le faire pendant que le châssis de roulement est à l'arrêt et en positionnant les roues tangentiellement au cercle de pivotement des bras de support des roues, puis de faire pivoter simultanément les quatre bras de support de roues en faisant fonctionner les roues ou, à défaut, en actionnant les bras de support de roues à la main ou mécaniquement. Une fois le nouvel écartement des roues atteint, l'orientation des roues est à nouveau modifiée pour rétablir le parallélisme entre elles et permettre le déplacement du châssis de roulement au sol dans des conditions habituelles.

Cette manière de faire évite de recourir à une translation du châssis au sol lors du pivotement des bras de support de roues, et donc des inconvénients associés, et elle évite aussi de solliciter de façon importante la gomme des pneus et le sol du fait de l'orientation tangentielle des roues lors du pivotement des bras de support des roues.

Cependant, le procédé de déploiement décrit nécessite l'intervention de l'opérateur lors des différentes phases du déploiement des roues. Et de surcroit, cette manière de faire a pour inconvénient que lors des opérations de déploiement ou de rétractation des roues, le châssis risque de se translater au sol sous l'effet de la gravité s'il repose sur un sol incliné, ce qui n'est pas souhaitable. En effet, il peut y avoir certaines phases des opérations de déploiement ou de rétractation des roues durant lesquelles celles-ci sont toutes en roue libre avec une orientation compatible avec une translation de la nacelle élévatrice au sol.

Le document US2015/259185A1 divulgue un procédé selon le préambule de la revendication 1.

Selon un aspect, le but de la présente invention est de fournir pour la technologie dite des essieux en X un procédé prévu pour être mis en œuvre par l'électronique de bord de la nacelle élévatrice et palliant au moins partiellement les inconvénients précités. En particulier, un but du procédé de l'invention est d'éviter tout risque de translation accidentelle de la nacelle élévatrice au sol sous l'effet de la gravité lors de son exécution.

A cette fin, la présente invention propose un procédé mis en œuvre par une électronique de bord d'une nacelle élévatrice pour déplacer une paire de roues avant et une paire de roues arrière de la nacelle élévatrice entre une position initiale et une position finale dont l'une correspond à une position rétractée et l'autre à une position déployée, la nacelle élévatrice reposant au sol par le biais des roues avec un écartement de la paire de roues avant et un écartement de la paire de roues arrière qui sont supérieurs dans la position déployée par rapport à la position rétractée, la nacelle élévatrice comprenant un châssis et quatre bras supportant chacun l'une respective des roues, chacune des roues étant montée à une première extrémité du bras correspondant dont une deuxième extrémité distale est montée pivotante au châssis pour déplacer la roue entre la position rétractée et la position déployée le long d'une trajectoire de pivotement du bras, chacune des roues ayant une direction de roulement au sol modifiable par un changement commandé d'orientation de la roue par rapport au bras correspondant, le procédé comprenant pour chaque roue les étapes successives suivantes :
a. changement d'orientation de la roue par rapport au bras correspondant pour avoir une orientation tangentielle à la trajectoire de pivotement du bras correspondant,
b. déplacement de la roue de la position initiale à la position finale par actionnement en pivotement du bras correspondant, un éventuel système de freinage de la roue étant inactif durant le déplacement et la roue étant maintenue orientée tangentiellement à la trajectoire de pivotement du bras durant le déplacement, et optionnellement
c. commande d'un changement d'orientation de la roue par rapport au bras correspondant de manière que, après exécution de l'étape c) pour toutes les roues, les roues aient toutes une direction de roulement qui corresponde à une direction commune de déplacement de la nacelle élévatrice au sol,
dans lequel l'exécution des étapes a), b) et le cas échéant c) pour l'ensemble des roues est désynchronisée de manière que, à tout moment depuis le début de l'étape a) jusqu'à la fin de l'étape b) ou le cas échéant de l'étape c) pour l'ensemble des roues, au moins l'une des modalités suivantes soient satisfaites :
- le système de frein d'au moins une roue est actif,
- au moins une roue est soumis à un entrainement motorisé en rotation,
- l'orientation relative des roues entre elles empêche toute translation de la nacelle élévatrice au sol sous l'effet de la gravité, étant entendu que cette dernière modalité s'apprécie bien entendu pour une inclinaison du sol sur lequel repose la nacelle élévatrice qui soit inférieure ou égale à une inclinaison maximale autorisée pour effectuer l'opération de déploiement ou de rétractation des roues.

Grâce à la désynchronisation telle que définie, tout risque de translation accidentelle de la nacelle élévatrice 1 au sol sous l'effet de la gravité pendant l'exécution du procédé est exclue dans le cas où la nacelle élévatrice 1 repose sur un sol incliné, du moins dans le cas où l'inclinaison du sol n'est pas supérieure à l'inclinaison maximale admise pour utiliser la nacelle élévatrice. Par souci de simplicité, les bras supportant les roues sont de préférence réalisés chacun sous une forme monobloc rigide.

Selon l'invention
- l'étape b) est lancée de manière synchronisée pour une première paire de roues ;
- l'étape b) est lancée de manière synchronisée pour une deuxième paire de roues, la deuxième paire de roues étant formée par les roues autres que les deux roues formant la première paire de roues ; et
- l'étape b) est lancée pour la deuxième paire de roues avec un décalage dans le temps par rapport à la première paire de roues.

Suivant des modes de réalisation préférés, l'invention comprend une ou plusieurs des caractéristiques suivantes :
- l'exécution des étapes a), b) et le cas échéant c) pour l'ensemble des roues (2, 3) est désynchronisée de manière que, à tout moment depuis le début de l'étape a) jusqu'à la fin de l'étape b) ou le cas échéant c), au moins l'une des modalités suivantes soient satisfaites :
   - le système de frein d'au moins deux roues est actif,
   - au moins deux roues sont soumis à un entrainement motorisé en rotation,
   - l'orientation relative des roues entre elles empêche toute translation de la nacelle élévatrice au sol sous l'effet de la gravité ;
- l'étape a) est lancée pour chacune des roues avant que l'exécution de l'étape b) ne soit terminée pour l'une quelconque des autres roues ;
- l'exécution de l'étape b) pour chacune des roues se chevauche au moins partiellement dans le temps avec l'exécution de l'étape b) pour les autres roues ;
- l'étape b) est exécutée de manière synchronisée pour la première paire de roues, et l'étape b) est exécutée de manière synchronisée pour la deuxième paire de roues.
- l'actionnement en pivotement du bras lors de l'étape b) se fait : au moyen d'un actionneur dédié à l'actionnement d'un ou plusieurs bras, et/ou par entrainement motorisé en rotation de la roue correspondant au bras ;
- l'actionnement en pivotement du bras lors de l'étape b) pour au moins l'une des roues comprend ou consiste en un entrainement motorisé en rotation de la roue
- pour une roue, un changement de direction de roulement au sol par rapport au bras correspondant s'opère par un pivotement de la roue par rapport à un axe de pivotement qui est décalé par rapport à un plan médian de la roue perpendiculaire à l'axe de rotation de cette roue, et le changement d'orientation de la roue par rapport au bras correspondant de l'étape a) et/ou l'étape b) est obtenu ou assisté par un entrainement motorisé en rotation de la roue ;
- le procédé est mis en œuvre par l'électronique de bord sur actionnement d'au moins une commande par un opérateur, dans lequel l'exécution du procédé est poursuivie par l'électronique de bord jusqu'à une position finale des roues correspondant à une position rétractée ou déployée extrémale tant que l'actionnement de la commande est maintenu par l'opérateur et est interrompue par l'électronique de bord en cas de relâchement de la commande par l'opérateur avant que la position rétractée ou déployée extrémale des roues ait été atteinte ; dans ce dernier cas, l'électronique de bord peut aussi empêcher le levage d'une plate-forme de travail de la nacelle élévatrice dans le cas où les roues ne sont pas toutes dans la position déployée extrémale ; de préférence, dans ce dernier cas, si l'exécution du procédé est interrompue par l'électronique de bord du fait du relâchement de la commande par l'opérateur et que les roues ne sont pas toutes dans la position déployée extrémale, alors l'électronique de bord enclenche une signalisation informant l'opérateur que le levage de la plate-forme de travail est empêché ;
- le procédé est mis en œuvre par l'électronique de bord sur actionnement d'au moins une commande par un opérateur, dans lequel l'exécution du procédé est poursuivie par l'électronique de bord jusqu'à une position finale des roues correspondant à une position rétractée ou déployée extrémale tant que l'actionnement de la commande est maintenu par l'opérateur et en cas de relâchement de la commande par l'opérateur pendant l'exécution de l'étape b) pour chacune des roues avant que la position rétractée ou déployée extrémale des roues ait été atteinte, l'électronique de bord poursuit l'exécution du procédé jusqu'à une position finale modifiée des roues qui est intermédiaire entre la position rétractée extrémale et la position déployée extrémale ; de préférence, si l'électronique de bord poursuit l'exécution du procédé jusqu'à une position finale modifiée des roues qui est intermédiaire entre la position rétractée extrémale et la position déployée extrémale, alors l'électronique de bord empêche en outre le levage d'une plate-forme de travail de la nacelle élévatrice ou bien limite une hauteur maximale à laquelle l'opérateur peut lever la plate-forme de travail par rapport au cas où les roues sont toutes dans la position déployée extrémale.

L'invention propose aussi une nacelle élévatrice, comprenant :
- un châssis,
- une plate-forme de travail,
- une structure de levage montée sur le châssis et supportant la plate-forme de travail pour la lever en hauteur,
- une paire de roues avant et une paire de roues arrière déplaçables entre une position rétractée et une position déployée, la nacelle élévatrice reposant au sol par le biais des roues avec un écartement de la paire de roues avant et un écartement de la paire de roues arrière qui sont supérieurs dans la position déployée par rapport à la position rétractée,
- une électronique de bord,
- quatre bras supportant chacun l'une respective des roues, chacune des roues étant montée à une première extrémité du bras correspondant dont une deuxième extrémité distale est montée pivotante au châssis pour déplacer la roue entre la position rétractée et la position déployée le long d'une trajectoire de pivotement du bras, chacune des roues ayant une direction de roulement au sol modifiable par un changement d'orientation de la roue par rapport au bras correspondant, l'électronique de bord étant prévu pour commander un changement d'orientation de la roue par rapport au bras correspondant,
- un système de freinage pour au moins deux des roues et qui est prévu pour être commandé par l'électronique de bord,
dans laquelle pour chacune des roues, il est prévue que la roue est motrice, l'entrainement motorisé en rotation de la roue pouvant être commandée par l'électronique de bord, et/ou que le bras correspondant est actionnable en pivotement par un dispositif d'actionnement de la nacelle élévatrice, et dans laquelle l'électronique de bord est configurée pour mettre en œuvre le procédé selon l'invention.

Selon un mode de réalisation préféré, la nacelle élévatrice comprend en outre un ou plusieurs organes de commande manuel agencé de préférence sur un pupitre de commande monté sur la plate-forme de travail, l'électronique de bord étant prévue pour mettre en œuvre l'une quelconque des caractéristiques préférentielles du procédé relatives à l'actionnement d'une commande par l'opérateur par rapport à l'actionnement de l'organe de commande manuel ou d'au moins l'un des organes de commande manuel.

Dans ce dernier cas, le ou les organes de commande manuel comprennent ou consistent en au moins un interrupteur précontraint vers une position de repos, et plus préférentiellement comprennent ou consistent en :
- au moins un interrupteur-inverseur qui est précontraint vers une position centrale de repos, l'électronique de bord étant prévue pour provoquer le déplacement des roues (2, 3) vers la position déployée que si l'interrupteur est actionné dans une direction donnée et à provoquer le déplacement des roues (2, 3) vers la position rétractée que qi l'interrupteur est actionné dans une direction opposée ; et/ou
- au moins deux interrupteurs précontraints chacun vers une position de repos, l'électronique de bord étant prévue pour provoquer le déplacement des roues (2, 3) vers la position déployée que si l'un des interrupteurs est actionné et à provoquer le déplacement des roues (2, 3) vers la position rétractée que si l'autre interrupteur est actionné.

D'autres aspects, caractéristiques et avantages de l'invention apparaîtront à la lecture de la description qui suit d'un mode de réalisation préféré de l'invention, donnée à titre d'exemple et en référence au dessin annexé d'une nacelle élévatrice à quatre roues déplaçables d'une position rétractée à une position déployée et inversement.
[Fig.1] représente une vue en perspective de la nacelle élévatrice avec ses quatre roues en position rétractée.
[Fig.2] représente une vue de dessus de la nacelle élévatrice avec ses quatre roues en position rétractée.
[Fig.3] représente une vue en perspective de la nacelle élévatrice avec ses quatre roues en position déployée.
[Fig.4] représente une vue de dessus de la nacelle élévatrice avec ses quatre roues en position déployée.
[Fig.5] représente une vue en perspective du châssis de la nacelle élévatrice observé depuis un point au-dessus du châssis, les roues étant en position déployée.
[Fig.6] représente une vue en perspective du châssis de la nacelle élévatrice observé depuis un point au-dessous du châssis, les roues étant en position déployée.
[Fig.7] représente une vue en perspective du châssis de la nacelle élévatrice, les roues étant en position rétractée correspondant à une position initiale à partir de laquelle les roues vont être passées en position déployée.
[Fig.8] représente une vue de dessus du châssis, les roues étant dans la configuration de la [Fig.7].
[Fig.9] représente une vue de dessus du châssis, les roues et leurs bras de support étant dans une position à un instant donné du procédé de déploiement des roues.
[Fig.10] représente une vue de dessus du châssis, les roues et leurs bras de support étant dans une position à un instant du procédé de déploiement des roues qui est postérieur à celui de la [Fig.9].
[Fig.11] représente une vue de dessus du châssis, les roues et leurs bras de support étant dans une position à un instant du procédé de déploiement des roues qui est postérieur à celui de la [Fig.10].
[Fig.12] représente une vue de dessus du châssis, les roues et leurs bras de support étant dans une position à un instant du procédé de déploiement des roues qui est postérieur à celui de la [Fig.11].
[Fig.13] représente une vue de dessus du châssis, les roues et leurs bras de support étant dans une position à un instant du procédé de déploiement des roues qui est postérieur à celui de la [Fig.12].
[Fig.14] représente une vue de dessus du châssis, les roues et leurs bras de support étant dans une position à un instant du procédé de déploiement des roues qui est postérieur à celui de la [Fig.13].
[Fig.15] représente une vue de dessus du châssis, les roues et leurs bras de support étant dans une position à un instant du procédé de déploiement des roues qui est postérieur à celui de la [Fig.14].
[Fig.16] représente un ordinogramme d'un mode de réalisation préféré du procédé de l'invention.
[Fig.17] représente le pupitre de commande monté à bord de la plate-forme de travail de la nacelle élévatrice.

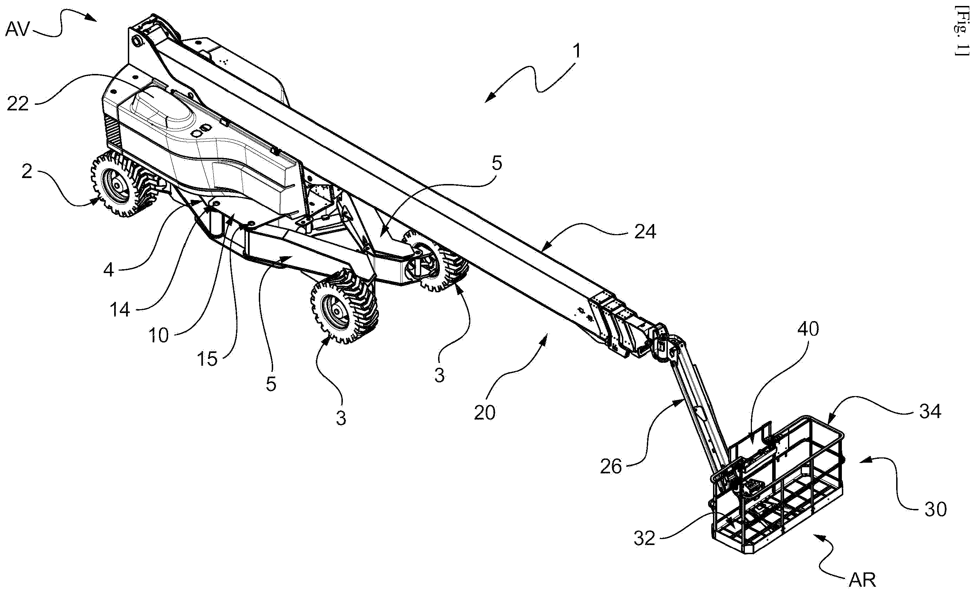

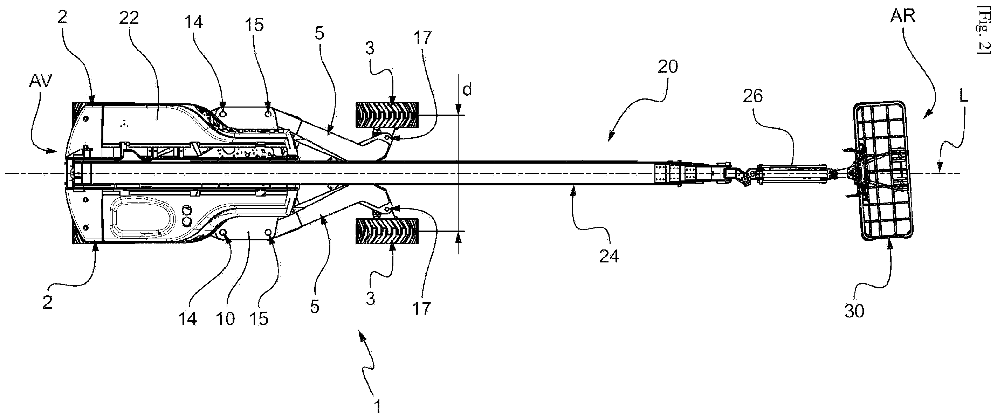

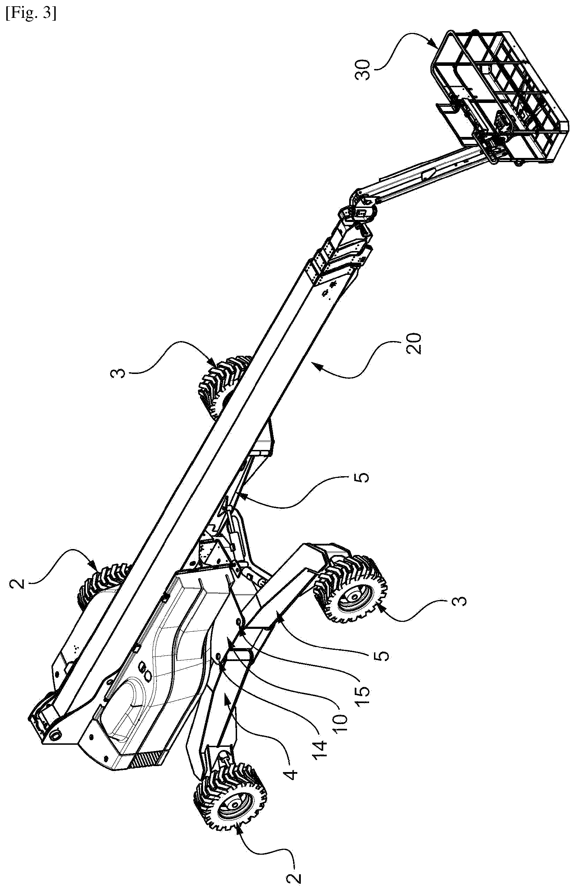

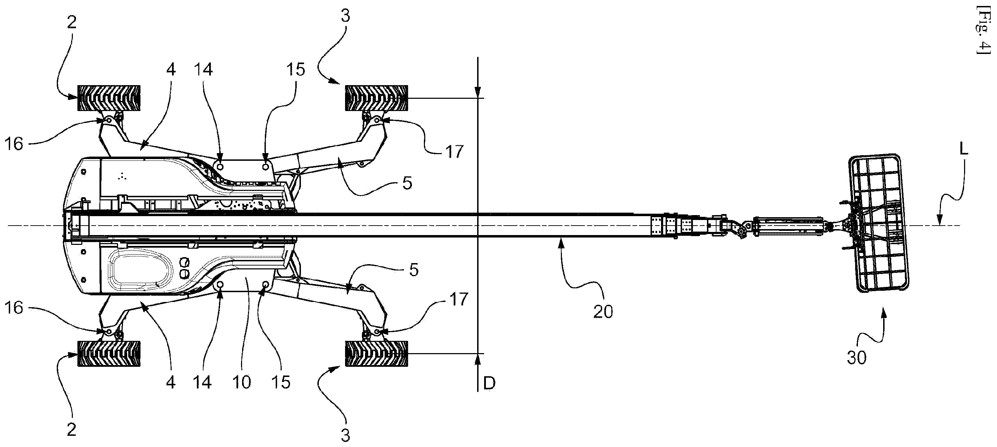

Un exemple de mise en œuvre du procédé selon l'invention va maintenant être détaillé en référence à une nacelle élévatrice 1 dont une vue d'ensemble est illustrée par les figures 1 et 2 d'une part et les figures 3 et 4 d'autre part. Dans la suite de la description, toute référence à une orientation verticale ou horizontale est définie par rapport au cas où la nacelle élévatrice 1 repose sur un sol formant un plan de référence horizontal.

La nacelle élévatrice 1 comprend un châssis 10 et une structure élévatrice 20 supportant une plate-forme de travail 30 prévue pour recevoir à bord du personnel et du matériel en vue de réaliser des travaux en hauteur. La plate-forme 10 comprend classiquement un plancher 32 et un garde-corps 34. Un pupitre de commande 40 est agencé sur la plate-forme de travail 30. Il permet à un opérateur à bord de la plate-forme de travail 30 de commander la structure élévatrice 20 pour déplacer la plate-forme de travail 30 en hauteur jusqu'à la position souhaitée, ainsi que de faire déplacer le châssis 10 au sol.

La structure élévatrice 20 comprend une tourelle 22 montée sur le châssis 10 et une flèche télescopique 24 montée de manière pivotante sur la tourelle 22 autour d'un axe horizontal. La tourelle 22 est montée pivotante autour d'un axe vertical sur le châssis 10, ce qui permet de modifier l'orientation de la structure élévatrice 20 et donc l'orientation de la plate-forme de travail 30 par rapport au châssis 10. Pour permettre de déplacer localement la plate-forme de travail 30 sans agir sur la flèche 24, la structure élévatrice 20 comprend aussi un bras pendulaire 26 monté de manière articulée par une extrémité à l'extrémité supérieure de la flèche télescopique 24 tandis que l'autre extrémité du bras pendulaire 26 supporte de manière articulée la plate-forme de travail 30. L'on comprendra que la structure élévatrice 20 peut être différente de celle décrite. Par exemple, elle peut comprendre additionnellement un bras articulé pantographique qui est monté par une extrémité sur la tourelle 22 autour d'un axe horizontal et qui supporte à son autre extrémité la flèche télescopique 24 autour également d'un axe horizontal, le bras articulé étant prévu pour pouvoir se déplier en hauteur. Ou encore le bras pendulaire 26 peut être omis. La structure élévatrice 20 comprend classiquement un ensemble d'actionneurs pour produire les différents mouvements de la structure élévatrice 20, par exemple un moteur hydraulique pour faire tourner la tourelle 22 et un ensemble de vérins hydrauliques pour le déploiement de la flèche télescopique 24, le déplacement local du bras pendulaire 26, ainsi que de la plate-forme de travail 30.

Le châssis 10 est équipé de deux roues avant 2 et deux roues arrière 3 prévues pour venir en contact avec le sol : le côté avant, respectivement arrière, de la nacelle élévatrice 1 est indiquée par la flèche référencée AV, respectivement AR. En utilisation, la nacelle élévatrice 1 repose sur le sol par le biais des roues 2, 3 lesquelles permettent la translation de la nacelle élévatrice au sol.

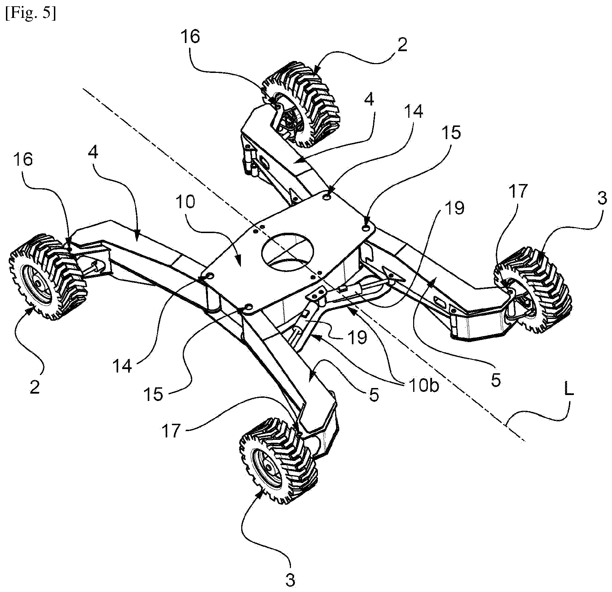

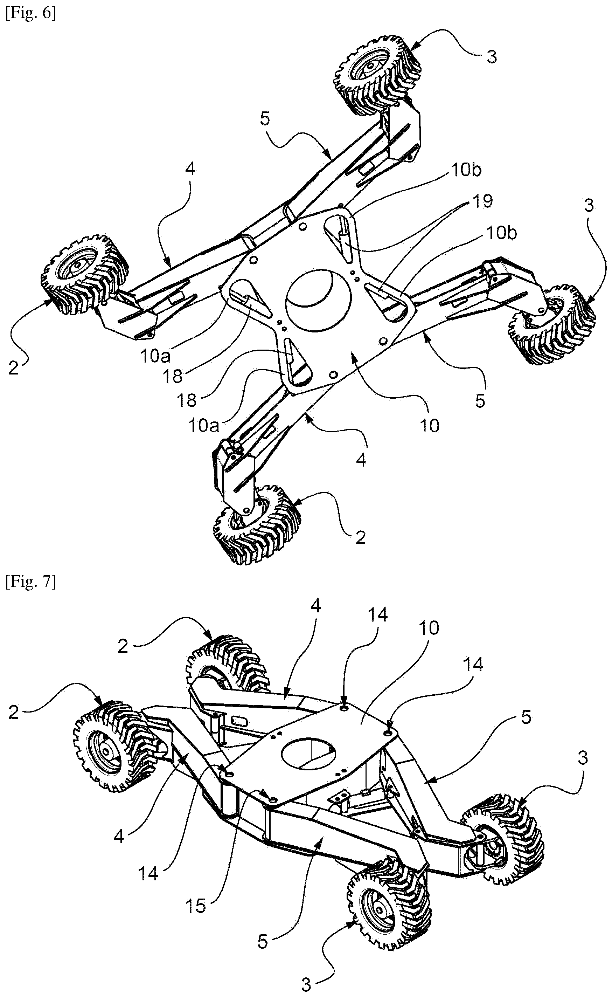

Les roues 2, 3 sont supportées chacune par un bras respectif référencé 4 pour chacune des roues avant 2 et 5 pour chacune des roues arrière 3. Plus particulièrement, chacune des roues 2, 3 est montée à une extrémité du bras correspondant 4 ou 5 tandis qu'une deuxième extrémité distale du bras est montée pivotante au châssis 10. Comme cela est le mieux visible sur les figures 5 et 6, les bras 4 et 5 ont de préférence la même longueur et sont agencés de manière symétrique par rapport au plan médian vertical longitudinal L de la nacelle élévatrice 1. La direction de translation normale de la nacelle élévatrice 1 vers l'avant et vers l'arrière se confond, en vue de dessus, avec le plan L. En variante, les bras 5 peuvent avoir une longueur différente des bras 4.

Le pivotement de chaque bras 4, 5 par rapport au châssis 10 permet de déplacer la roue correspondante 2 ou 3 entre une position rétractée illustrée par les figures 1 et 2 et une position déployée illustrée par les figures 3 et 4. Pour cela, l'axe de pivotement 14, respectivement 15 de chaque bras 4, respectivement 5, par rapport au châssis 10 est vertical - ou du moins présente une inclinaison à composante verticale - de manière à déplacer la roue correspondante entre la position rétractée et la position déployée.

Comme cela est visible sur les figures 2 et 4, l'écartement horizontal 'D' entre les roues arrière 3 dans la position déployée est supérieur à leur écartement horizontal 'd' dans la position déployée. Il en va de même de l'écartement horizontal - non référencé sur les figures - entre les roues avant 2. Aussi bien en position rétractée qu'en position déployée, l'écartement horizontal des roues avant 2 est de préférence identique à l'écartement horizontal 'd', respectivement 'D', des roues arrière 3. En variante, leur écartement pourrait cependant être différent.

Dans la position rétractée des roues 2, 3, leur écartement 'd' est de préférence inférieure ou égale à 2,5 m, ce qui rend la nacelle élévatrice 1 compatible à la circulation sur les routes de largeur standard ou au chargement sur remorque aux fins de transport sur de telles routes. La position rétractée des roues 2, 3 correspond donc à une configuration de transport ou de déplacement sur route de la nacelle élévatrice 1.

La position déployée des roues 2, 3 est au contraire une configuration de travail de la nacelle élévatrice 1 prévue pour le levage de la structure élévatrice 20 de manière à positionner la plate-forme de travail 30 à une hauteur de travail souhaitée. Dans cette position, l'écartement 'D' entre les roues 2 et entre les roues 3 est de préférence supérieure à 3 m, voire supérieure ou égale à 4 m, voire peut atteindre 5 m. En position déployée, l'empattement, c'est-à-dire la distance entre les roues avant 2 et les roues arrière 3 est de préférence sensiblement égal à l'écartement 'D'. Le positionnement relatif des roues 2, 3 en position déployée procure une stabilité notablement accrue à la nacelle élévatrice 1 par rapport à la position rétractée. Il est ainsi possible pour la nacelle élévatrice 1 de lever la plate-forme de travail 30 à des hauteurs très importantes, par exemple de plus de 40 m, ce qui ne serait pas possible dans la position rétractée de transport.

Les positions rétractée et déployée des bras 4 et 5 correspondent de préférence aux positions de pivotement extrémales pour lesquelles les roues 2, respectivement 3, sont le plus rapprochées l'une de l'autre pour la première et le plus éloignées l'une de l'autre pour la deuxième. La nacelle élévatrice 1 peut cependant être prévue aussi pour une utilisation avec les roues 2, 3 que partiellement déployées, autrement dit les bras 4, 5 sont alors placées dans une position de pivotement intermédiaire entre les deux positions de pivotement extrémales.

Des actionneurs de bras sont prévus pour faire pivoter chacun des bras 4, 5 entre la position rétractée et la position déployée. En l'occurrence, comme cela est le mieux visible sur les figures 5 et 6, chaque bras 4, 5 est actionnable par un vérin correspondant 18, respectivement 19, agencé entre le châssis 10 et le bras correspondant. En variante, il peut être envisagé d'utiliser un actionneur commun à deux bras, par exemple un vérin commun pour les bras avant 4 et un autre pour les bras arrière 5. Dans ce dernier cas, le vérin peut être monté entre les deux bras correspondants par une extrémité respective. Alternativement, le vérin peut être monté par une extrémité au châssis 10 et par son extrémité opposée à un mécanisme articulé reliant les deux bras correspondants de manière que le vérin actionne en pivotement les deux bras par le biais du mécanisme articulé. Dans une autre variante, l'actionnement en pivotement des bras 4, 5 peut aussi être effectuée par l'entrainement en rotation des roues correspondantes lorsque les roues sont motrices comme nous le verrons plus loin. Dans ce cas, l'actionneur dédié - c'est-à-dire dans cet exemple le vérin correspondant 18 ou 19 - peut agir de manière coordonnée avec l'entrainement en rotation des roues ou bien être omis. Ces différentes variantes peuvent être mélangées : par exemple, la technologie d'actionnement peut être différente pour une première paire de bras par rapport à une deuxième paire de bras.

Il est préférable de protéger les vérins 18 et 19 de chocs éventuels contre des obstacles extérieurs à la nacelle élévatrice 1 lors de son déplacement au sol. Comme cela est illustré par les figures 5 et 6, cette protection peut être obtenue par une extension avant 10a et une extension arrière 10b du châssis 10 par rapport auxquelles les vérins 18, respectivement 19, sont placés en retrait dans la direction avant, respectivement arrière, quel que soit la position angulaire du bras correspondant 4 ou 5 entre la position rétractée et la position déployée. Ainsi, c'est le châssis 10 qui absorbera le choc avec un éventuel obstacle sans que ce dernier entre en contact avec le ou les vérins 18 ou 19. Il est préférable que l'extension avant 10a et l'extension arrière 10b soit située à un niveau en-dessous des vérins 18, respectivement 19, afin de protéger efficacement les vérins 18, 19 contre un obstacle sur le sol s'étendant sensiblement au même niveau de hauteur que les vérins 18, 19. Les extensions 10a et 10b peuvent venir de matière avec une plaque de base du châssis 10, en particulier avec une plaque de base inférieure du châssis 10 comme illustré par les figures 5 et 6.

Un système de verrouillage est prévu pour chaque bras 4 et 5 pour sélectivement bloquer leur pivotement par rapport au châssis 10 dans les positions extrémales de pivotement, c'est-à-dire dans la position rétractée et dans la position déployée, voire aussi dans des positions de pivotement intermédiaires. Une manière d'assurer le verrouillage est de bloquer le pivotement d'un bras 4 ou 5 par blocage hydraulique du vérin correspondant 18 ou 19, par exemple en prévoyant deux vannes commandées associées au vérin pour bloquer sélectivement le fluide hydraulique dans les deux chambres du vérin correspondant 18 ou 19 mis en œuvre sous la forme d'un vérin hydraulique à double effet. Cette manière est simple à mettre en œuvre et permet un blocage des bras 4, 5 dans toute position de pivotement intermédiaire.

D'autres systèmes de verrouillage sont possibles. Par exemple, le système de verrouillage peut consister à actionner en permanence le vérin correspondant 18 ou 19 à la fois dans la position rétractée et dans la position déployée afin de pousser constamment le bras 4 ou 5 contre une butée dédiée du châssis 10. Selon un autre exemple, il peut être prévu un dispositif électromécanique ou hydraulique dédié pour sélectivement solidariser de manière mécanique le bras 4 ou 5 par rapport au châssis 10 dans les positions de pivotement souhaitées, par exemple un dispositif prévu directement au niveau des axes de pivotement 14, 15 de manière à empêcher la rotation des bras ou bien un mécanisme à broche lié à l'un pour engager sélectivement des ouvertures dédiées qui sont associées à l'autre.

La nacelle élévatrice 1 est motorisée pour permettre son déplacement autonome au sol. En l'occurrence, chacune des roues 2, 3 est motrice. Bien que cela puisse être différent, il est préférable qu'un moteur électrique ou hydraulique - non représenté - soit intégré à chaque roue motrice 2 et/ou 3, ce qui évite de mettre en œuvre une chaîne complexe de transmission de mouvement depuis le châssis 10 si le ou les moteurs étaient installés sur le châssis 10 ou sur le bras correspondant 4 ou 5. En variante, seules les roues avant 2 sont motrices ou au contraire seules les roues arrière 3 sont motrices.

Chacune des roues 2, 3 est équipée d'un système de freinage - non représenté - qui peut être de tout type approprié connu en soi, par exemple un système de freinage hydraulique ou par électrovanne. En variante, seulement certaines roues en sont équipées, par exemple que la paire de roues avant 2 ou la paire de roues arrière 3. Dans ce cas, les mentions relatives à l'état actif ou inactif du système de frein seront ignorées pour la ou les roues concernées dans la description qui sera faite plus loin du procédé de déploiement des roues 2, 3. L'état actif du système de frein peut au besoin être alors remplacé par un placement d'au moins deux des roues dans une orientation mutuellement différente fournissant le même effet de maintien en place de la nacelle élévatrice 1 sur le sol.

Chacune des roues 2, 3 est directionnelle. Pour cela, les roues avant 2 sont montées chacune de manière pivotante au bras 4 correspondant autour d'un axe vertical 16 ou du moins qui présente une inclinaison à composante verticale. Il en va de même pour les roues arrière 3 par rapport au bras 5 correspondant : cf. l'axe de pivotement référencé 17. Le changement de direction de roulement au sol de chaque roue 2, 3, autrement dit le changement de leur orientation par rapport au bras correspondant 4 ou 5, est assuré par un actionneur de direction respectif, en l'occurrence un vérin monté entre le bras et la roue concernée. Il peut s'agir d'un vérin hydraulique ou électrique. D'autres technologies d'actionnement sont envisageables.

La nacelle élévatrice 1 comprend une électronique de bord qui permet de commander la motorisation des roues motrices 2 et/ou 3, les actionneurs des bras 4 et/ou 5, les systèmes de verrouillage du pivotement des bras 4, 5, les actionneurs de direction des roues 2, 3 et les systèmes de freinage des roues 2 et/ou 3.

Par ailleurs, la nacelle élévatrice 1 comprend des capteurs connus en soi pour indiquer à l'électronique de bord l'orientation angulaire des roues 2, 3 par rapport au bras correspondant 4, 5, ainsi que la position de pivotement des bras 4, 5 par rapport au châssis 10. A titre d'exemples non limitatifs, il peut s'agir de l'une des technologies de capteur suivantes :
- mesure linéaire de sortie de tiges des vérins par capteur à effet Hall ou capteur magnétostrictif placé dans le vérin concerné,
- mesure de l'angle sur le pivot du bras ou du pivot de direction par un capteur à effet Hall positionné sur le pivot concerné,
- mesure tout ou rien dans les positions extrémales de pivotement des bras 4, 5 par un capteur mécanique ou un capteur ILS par exemple.

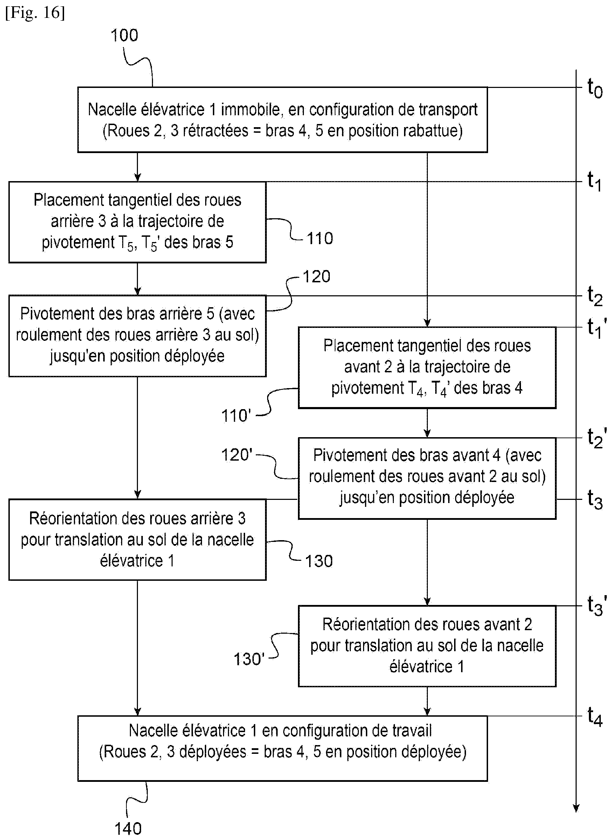

Nous allons maintenant décrire le procédé de déplacement des roues 2, 3 de leur position rétractée à leur position déployée en référence à l'ordinogramme de la [Fig.16]. L'on comprendra que cet ordinogramme indique seulement le début des étapes du procédé les unes par rapport aux autres, mais pas la fin des étapes les unes par rapport aux autres.

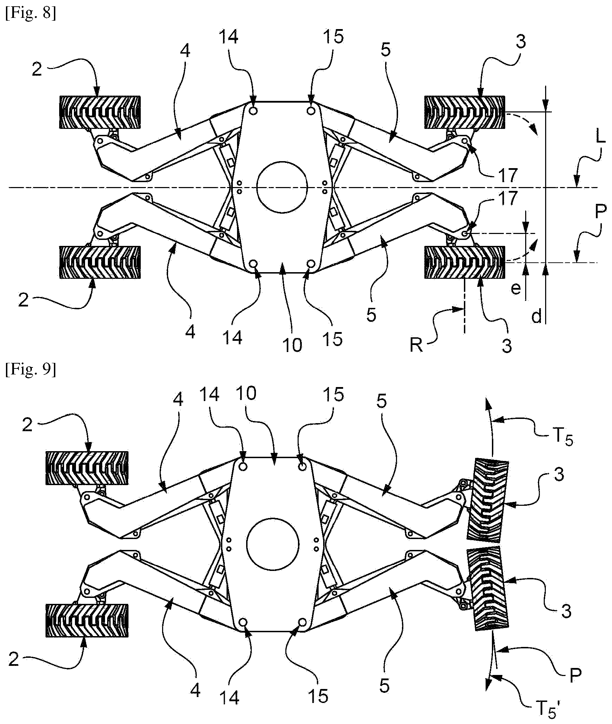

La position rétractée et la position déployée des roues 2, 3 correspondent aux positions extrémales de pivotement des bras 4, 5, mais il pourrait aussi s'agir de positions de pivotement intermédiaires. Les figures 8 à 15 illustrent le châssis 10 et la configuration des bras 4, 5 et des roues 2, 3 à différentes étapes du procédé. Il est mis en œuvre de manière automatique par l'électronique de bord de la nacelle élévatrice 1 après qu'une commande correspondante est activée par un opérateur. L'on comprendra que toute action du procédé décrit ci-après est commandée par l'électronique de bord, même en l'absence de mention explicite en ce sens.

Le procédé est mis en œuvre à partir d'une configuration initiale de la nacelle élévatrice 1 représentée aux figures 7 et 8. Elle est identifiée par la case 100 de l'ordinogramme de la [Fig.16] et correspond à un instant t₀ sur l'axe du temps. Dans cette configuration, la nacelle élévatrice 1 est immobilisée et en configuration de transport. Autrement dit, les systèmes de freinage des roues 2 et/ou 3 sont activés et les roues 2, 3 sont en position rétractée. Les systèmes de verrouillage du pivotement des bras sont activés. Les roues 2, 3 ont une orientation parallèle entre elles selon l'axe longitudinal L de la nacelle élévatrice 1. Autrement dit, les roues 2, 3 ont une direction de roulement commune qui permet une translation rectiligne de la nacelle élévatrice 1 au sol dans la direction avant AV ou arrière AR.

Dans le cas où les roues 2, 3 ont une orientation initiale différente, le procédé peut comprendre une étape préalable dans laquelle l'électronique de bord commande les actionneurs de direction des roues 2 et/ou 3 concernées de manière à les orienter comme mentionné précédemment. En variante, l'étape suivante peut aussi être exécutée directement à partir d'une orientation des roues 2 et/ou 3 quelconques.

Nous allons d'abord décrire les étapes relatives au déploiement des roues arrière 3.

Dans une première étape 110 qui démarre à l'instant t₁, l'électronique de bord commande les actionneurs de direction des roues arrière 3 de manière qu'elles adoptent une orientation tangentielle à la trajectoire de pivotement T₅, T₅' du bras 5 correspondant autour de son axe de pivotement 15. Autrement dit, la direction de roulement de chacune des roues 3 est rendue tangentielle à la trajectoire de pivotement T₅, T₅' du bras 5 correspondant. Cette situation est illustrée par la [Fig.9], la direction de pivotement des roues arrière 3 autour des axes de pivotement 17 étant symbolisée sur la [Fig.8] par les flèches arquées en pointillés.

Si comme dans l'exemple illustré, les axes de pivotement 17 des roues 3 sont décalés d'une distance 'e' non nulle par rapport au plan médian P des roues arrière 3 qui est perpendiculaire à leur axe de rotation R - cf. [Fig.8] -, il est préférable que le système de freinage des roues arrière 3 soit désactivé pendant toute la durée de cette première étape. Ceci permet d'éviter le frottement de la bande de roulement des pneumatiques des roues 3 sur le sol, ainsi que le creusement d'un sillon dans le sol s'il est meuble.

En outre, l'entrainement motorisé en rotation des roues 3 est activé pendant cette première étape pour assister le changement de direction des roues opérées par les actionneurs de direction des roues 3. Cela permet un dimensionnement moindre de ces derniers.

En variante, il peut être prévu que les actionneurs de direction des roues 3 assurent à eux seuls le changement d'orientation des roues arrière 3. Dans ce cas, les roues 3 sont laissées en roue libre pour rouler librement sur le sol lors de l'opération de changement d'orientation. Cela évite de prévoir une synchronisation de l'entrainement en rotation motorisé des roues 3 avec l'action des actionneurs de direction des roues 3.

Alternativement, il peut être prévu que l'orientation tangentielle des roues arrière 3 à la trajectoire de pivotement T5, T5' du bras 5 correspondant soit exclusivement obtenue par l'entrainement motorisé en rotation des roues arrière 3, c'est-à-dire sans participation active des actionneurs de direction des roues 3. Cela évite également de devoir synchroniser l'entrainement en rotation des roues 3 avec l'action des actionneurs de direction des roues 3.

Si, au contraire de l'exemple illustré, les axes de pivotement 15 étaient contenus dans le plan médian P et croisaient l'axe de rotation R des roues 15, la première étape est exécutée au moyen des seuls actionneurs de direction des roues 3, c'est-à-dire sans entrainement motorisé en rotation des roues 3. Aussi, il n'est pas utile dans ce cas de désactiver le système de freinage des roues 3.

Une fois la première étape 110 finie, autrement dit lorsque les roues 3 sont placées dans une orientation tangentielle à la trajectoire de pivotement T₅, T₅' du bras 5 correspondant comme illustré à la [Fig.9], l'électronique de bord lance - - cf. instant t₂ - une deuxième étape 120 qui consiste à faire pivoter les bras 5 pour amener les roues 3 en position déployée.

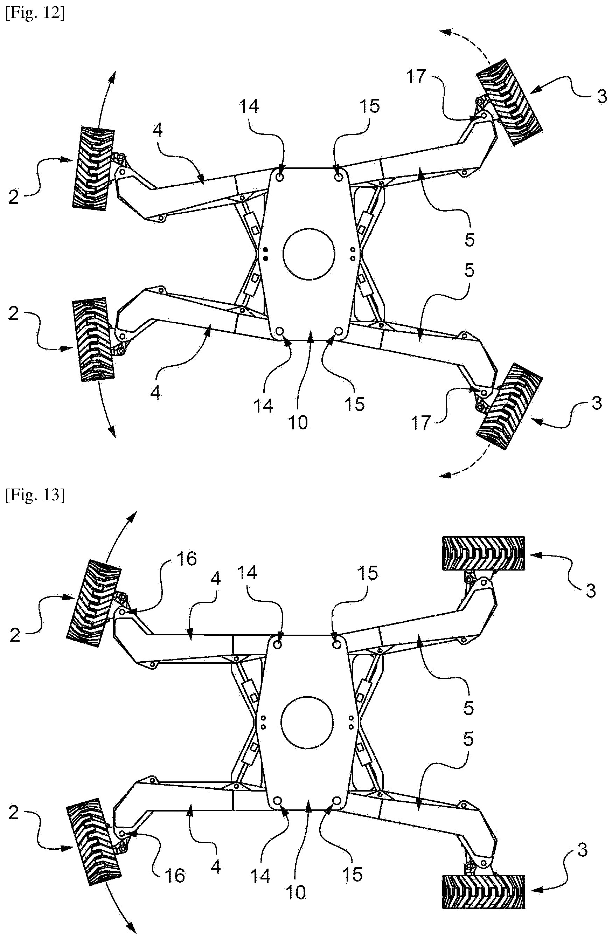

Pour cela, l'électronique de bord désactive le système de verrouillage du pivotement des bras 5 et provoque le pivotement des bras 5 jusqu'à sa position de pivotement correspondant à la position déployée des roues 3. Cette position est illustrée par la [Fig.12]. Le système de frein des roues 3 est désactivé pendant cette deuxième étape 120 et l'orientation tangentielle des roues 3 à la trajectoire de pivotement T5, T5' du bras 5 correspondant est maintenue pendant toute la durée de cette deuxième étape 120.

Le pivotement des bras 5 peut être provoqué uniquement grâce aux actionneurs des bras 5, c'est-à-dire en l'occurrence les vérins 19. Dans ce cas, les roues 3 sont laissées en roue libre pendant la durée de la deuxième étape 120, ce qui leur permet de rouler sur le sol pendant le pivotement des bras 5.

A l'inverse, le pivotement des bras 5 peut être provoqué uniquement grâce à un entrainement motorisé en rotation des roues 3 de manière à les faire rouler au sol. L'entrainement motorisé en rotation des roues 3 provoque en effet le pivotement des bras 5 du fait de l'orientation tangentielle des roues 3 à la trajectoire de pivotement T5, T5' du bras 5 correspondant. Dans cette variante, les actionneurs dédiés des bras 5 - c'est-à-dire en l'occurrence les vérins 19 - peuvent être omis.

Mais de manière préférentielle, le pivotement des bras 5 est provoqué par l'action combinée des actionneurs des bras 5 - c'est-à-dire en l'occurrence des vérins 19 - et de l'entrainement motorisé en rotation des roues 3. Cela a pour avantage de limiter la puissance requise à la fois des actionneurs des bras 5 et de la motorisation d'entrainement des roues 3.

Dans ces trois manières de provoquer le pivotement des bras 5, il n'y a presque aucun frottement de la bande de roulement des pneumatiques des roues 3 sur le sol et le risque de creuser un sillon dans un sol meuble est quasi-nul.

Le système de verrouillage du pivotement des bras 5 est activé à la fin de la deuxième étape 120, c'est-à-dire lorsque les bras 5 sont parvenus à leur position de pivotement correspondant à la position déployée des roues 3.

Après la deuxième étape 120, l'électronique de bord lance une troisième étape 130 - cf. l'instant t₃ - qui consiste à changer à nouveau l'orientation des roues arrière 3 de manière à leur faire adopter une direction de roulement au sol correspondant à une direction de translation de la nacelle élévatrice 1 au sol. De préférence, les roues arrière 3 sont replacées dans une orientation parallèle entre elles selon l'axe longitudinal L de la nacelle élévatrice 1 comme c'était le cas dans l'étape initiale 100. Autrement dit, les roues arrière 3 ont à nouveau une direction de roulement commune permettant une translation rectiligne de la nacelle élévatrice 1 au sol dans la direction avant AV ou arrière AR. Cette situation est illustrée par la [Fig.13] qui correspond au moment où les roues arrière 3 sont parvenues à cette nouvelle orientation.

L'actionnement opérant le changement d'orientation des roues arrière 3 lors de cette troisième étape 130 est réalisé selon l'une quelconque des manières décrites pour le changement d'orientation des roues arrière 3 opéré lors de la première étape 100.

A la fin de la troisième étape 130, le système de frein des roues arrière 3 est à nouveau activé.

Les étapes 110, 120 et 130 sont spécifiques au déploiement des roues arrière 3. Le déploiement des roues avant 2 se fait de la même manière que pour les roues arrière 3. Autrement dit, les mêmes étapes 110, 120 et 130 sont appliquées *mutatis mutandis* aux roues avant 2, les étapes ayant été référencées de manière correspondante 110', 120' et 130' dans l'ordinogramme de la [Fig.16]. La seule différence est que les étapes 110', 120' et 130' sont exécutées de manière décalée dans le temps par rapport aux étapes 110, 120 et 130. Comme cela est visible sur l'ordinogramme, la première étape 110' pour les roues avant 2 est lancé à un instant t₁' postérieur à l'instant t₁ auquel est lancé la première étape 110 pour les roues arrière 3. De ce fait, les deuxième et troisième étapes 120' et 130' relatives aux roues avant sont lancées aussi à des instants t2' et t3' postérieures respectivement aux instants t₂ et t₃ de lancement des étapes 120 et 130 pour les roues arrière 3, étant donné aussi que la vitesse d'exécution des différentes étapes est préférentiellement sensiblement la même pour les roues avant 2 et les roues arrière 3. La vitesse d'exécution pourrait cependant être différente.

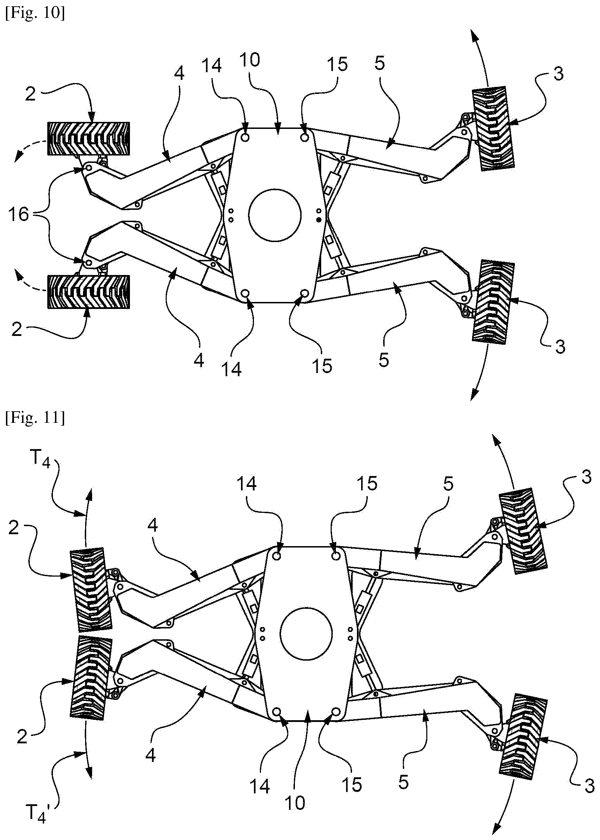

La [Fig.10] représente la position des bras 5 et des roues arrière 3 au cours de la deuxième étape 120 à l'instant t₁' où débute la première étape 110', c'est-à-dire au début du changement d'orientation des roues avant 2 pour les orienter tangentiellement à la trajectoire de pivotement des bras 4 correspondant. En l'occurrence, l'instant t₁' est situé entre les instants t₂ et t₃, mais cela pourrait être différent, par exemple entre les instants t₁ et t₂.

La [Fig.11] représente la position des bras 5 et des roues arrière 3 au cours de la deuxième étape 120 à l'instant où les roues avant 2 atteignent à la fin de l'étape 110' une orientation tangentielle à la trajectoire de pivotement des bras 4 correspondant.

La [Fig.12] représente la position des bras 4 et des roues avant 2 au cours de la deuxième étape 120' à l'instant t₃ où démarre l'étape 130 de réorientation des roues arrière 3.

La [Fig.13] représente la position des bras 4 et des roues avant 2 au cours de la deuxième étape 120' à l'instant où les roues arrière 3 ont fini d'être réorientées lors de l'étape 130.

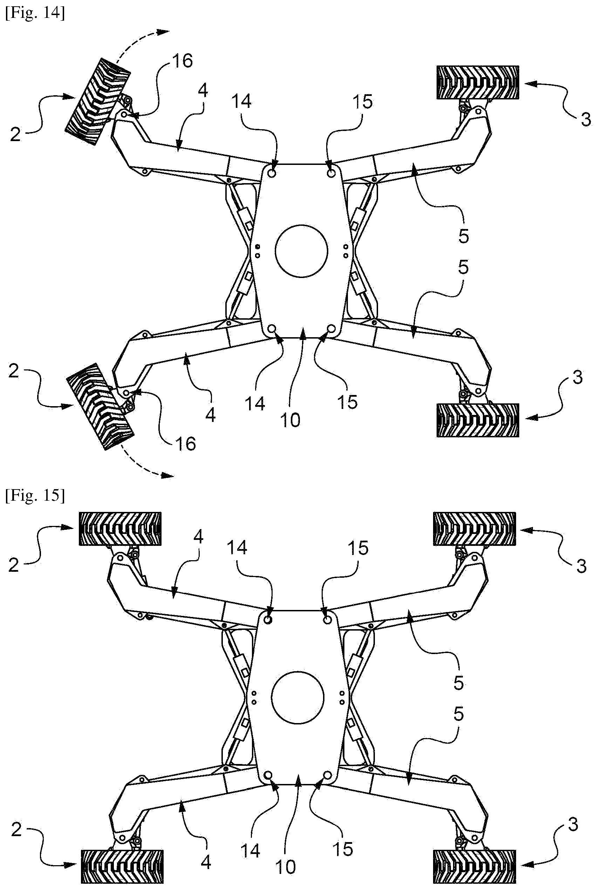

La [Fig.14] représente la position des bras 4 et des roues avant 2 à l'instant t3' où commence la réorientation des roues avant 2 de la troisième étape 130' alors que les roues arrière 3 ont déjà été réorientées à l'étape 130.

La [Fig.15] représente les bras 4 ; 5 et les roues 2, 3 dans leur configuration finale après l'exécution des étapes 130 et 130', c'est-à-dire où les roues 2, 3 sont en position déployée et réorientée, ce qui correspond à la case 140 de l'ordinogramme de la [Fig.16].

L'intérêt de désynchroniser le déploiement des roues avant 2 par rapport à celui des roues arrière 3 est de permettre d'exclure le risque que la nacelle élévatrice 1 puisse se déplacer en translation sous l'effet de la gravité si elle repose sur un sol incliné. En effet, si le déploiement des quatre roues 3, 4 était synchronisé, il existerait pendant les opérations de déploiement des moments où les roues avant 2 et les roues arrière 3 se trouvent simultanément en roue libre avec une orientation sensiblement identique ou suffisamment proche de sorte qu'il existerait un risque que la nacelle élévatrice 1 se déplace en translation.

Ce risque existe malgré le recours à un entrainement motorisé en rotation des roues 3 et 4 pendant toutes les étapes 110, 120 et 130 et 110', 120' et 130' si elles étaient exécutées de manière synchronisée. En effet, la transition entre l'étape 110 et l'étape 120 requière une inversion du sens d'entrainement en rotation des roues arrière 3, et de même pour les étapes correspondantes pour les roues avant 2. Cette inversion de sens de rotation implique un laps de temps de quelques secondes pendant lequel les roues 2, 3 sont en roue libre avant d'être effectivement entrainées en rotation dans l'autre sens. Or, comme cela est visible sur les figures 9 et 11 respectivement, cette situation intervient lorsque les bras 5 et 4 sont encore rabattus alors que les roues arrière 3 et les roues avant 2 sont orientées tangentiellement à la trajectoire de pivotement du bras 4 ou 5 correspondant. De ce fait, les roues 2, 3 ont une orientation proche de la perpendiculaire à l'axe longitudinal L - voire correspondante à celle-ci selon la conception de la nacelle élévatrice 1 - qui peut permettre une translation de la nacelle élévatrice 1 sous l'effet de la gravité si elle repose sur un sol incliné dans cette direction.

La durée de cette situation à risque est habituellement plus importante dans le cas où il n'est pas recouru à un entrainement motorisé en rotation des roues 3 et 4 pendant les étapes 110, 120 et 130 et 110', 120' et 130'. Il est donc préférable de recourir à un entrainement motorisé en rotation des roues 3 et 4 pendant toutes les étapes 110, 120 et 130 et 110', 120' et 130' pour d'emblée limiter le risque de déplacement de la nacelle élévatrice 1 sous l'effet de la gravité.

Dans tous les cas, la désynchronisation du déploiement des roues avant 2 par rapport à celui des roues arrière 3 peut être mis en œuvre de manière à exclure le risque de déplacement de la nacelle élévatrice 1 sous l'effet de la gravité qui vient d'être expliqué. En effet, la désynchronisation peut être mise en œuvre de manière que, à tout moment lors des opérations de déploiement, au moins l'une des modalités suivantes soient satisfaites :
- le système de frein d'au moins une roue 2 ou 3, plus préférentiellement de deux roues, est actif,
- au moins une roue 2, 3, plus préférentiellement deux roues, fait l'objet d'un entrainement motorisé en rotation,
- l'orientation relative des roues 2, 3 entre elles, autrement dit leur direction de roulement, est suffisamment différente pour empêcher une translation de la nacelle élévatrice 1 au sol sous l'effet de la gravité sur sol incliné.

Chacune de ses modalités suffit par elle-même à exclure un risque de translation de la nacelle élévatrice 1 au sol sous l'effet de la gravité dans le cas où la nacelle élévatrice 1 repose sur un sol incliné.

Selon la conception structurelle du châssis 10 et des bras 4, 5, il peut également exister un risque de pivotement de la nacelle élévatrice 1 sur elle-même sous l'effet de la gravité si elle repose sur un sol incliné alors que les roues 2, 3 sont toutes orientées tangentiellement à la trajectoire de pivotement du bras correspondant 4, 5 : cela correspond dans notre exemple à la partie des étapes 120 et 120' qui est exécutée en recouvrement temporel. Malgré les trajectoires de pivotement des bras 4, 5 qui ne sont pas exactement superposées, ce risque peut exister lorsque leurs axes de pivotement 14, 15 sont relativement proches les uns des autres comparativement à la longueur des bras 4, 5. Ce risque peut alors être supprimé en soumettant au moins une des roues 2, 3 à un entrainement motorisé en rotation au moins pendant les moments où toutes les roues 2, 3 sont simultanément dans une orientation tangentielle à la trajectoire de pivotement du bras correspondant 4, 5. Une autre manière d'exclure ce risque est de faire en sorte que l'ensemble des roues 2, 3 ne soit jamais simultanément orientées tangentiellement à la trajectoire de pivotement du bras correspondant 4, 5, ce qui cependant rallonge la durée des opérations de déploiement des roues 2, 3.

Le passage des roues 2, 3 de leur position déployée à leur position rétractée se fait en exécutant le procédé de manière inversée. La désynchronisation du déplacement des roues avant 2 par rapport à celui des roues arrière 3 procure les mêmes avantages que dans ceux mentionnés à propos du déploiement.

Le procédé décrit peut faire l'objet de nombreuses variantes. Par exemple, les étapes du procédé peuvent être inversées dans le sens que le déploiement des roues avant 2 est lancé avant celui des roues arrière 3. La troisième étape 130, respectivement 130', peut aussi être omise s'il n'est pas envisagé de déplacer la nacelle élévatrice 1 une fois les roues 2, 3 déployées en position de travail. Dans ce cas, le système de freinage des roues 2 et/ou 3 est activé à la fin des étapes 120 et 120'.

Il peut aussi être prévu que le déplacement des roues 2, 3 entre les positions rétractée et déployée soit opéré en synchronisant une première paire de roues entre elles et une deuxième paire de roues entre elles qui soient autres que les roues avant 2 et les roues arrière 3 respectivement. Par exemple, la première paire de roues peut consister dans les roues 2, 3 du côté gauche et celles de la deuxième paire de roues dans les roues 2, 3 du côté droit. Ou encore la première paire de roues peut consister dans la roue avant gauche et la roue arrière droite et la deuxième paire dans la roue avant droite et la roue arrière gauche. Bien entendu, le déplacement de la première paire de roues par rapport à la deuxième paire de roues est désynchronisé pour bénéficier des avantages mentionnés plus haut.

Il est avantageux de synchroniser le déplacement d'une première paire de roues entre elles et le déplacement d'une deuxième paire de roues entre elles car il a été constaté que cela limite les mouvements induits au niveau de la plate-forme de travail 30 par la mise en œuvre du procédé de déploiement ou de rétractation des roues 2, 3, et par conséquent cela limite l'inconfort de l'opérateur à bord de la plate-forme de travail 30.

Pour les mêmes raisons de limitation de mouvements induits au niveau de la plate-forme de travail 30, il a été constaté qu'il est préférable de lancer le déploiement ou la rétractation de la deuxième paire de roues pendant que les opérations de déploiement ou rétractation de la première paire de roues sont en cours. Cela a en outre l'avantage de réduire le temps nécessaire pour déployer les roues 2, 3 par rapport au cas d'un lancement des étapes de déploiement ou rétractation de la deuxième paire de roues après que les étapes de déploiement de la première paire de roues sont finies. Il est aussi préférable que ce soient les paires de roue avant 2 et les paires de roues arrière 3 qui sont respectivement synchronisées entre elles.

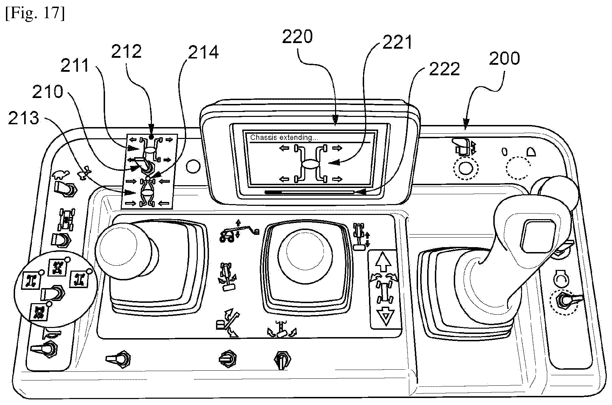

La [Fig.17] illustre le pupitre de commande 200 de la nacelle élévatrice 1 qui est monté à bord de la plate-forme de travail 30. Il comporte classiquement des organes de commande permettant à un opérateur de provoquer le levage en hauteur de la plate-forme de travail 30, ainsi que le déplacement de la nacelle élévatrice 1 au sol.

Il comporte en outre un organe de commande 210 permettant à l'opérateur de déclencher au choix la mise en œuvre du procédé de déploiement ou de rétractation des roues 2, 3. En l'occurrence, l'organe de commande 210 est un interrupteur-inverseur à position centrale neutre de type poussoir à levier. En le poussant vers le haut, l'électronique de bord provoque le déploiement des roues 2, 3 tant que l'opérateur le maintient vers le haut. S'il relâche le levier de l'interrupteur, il revient en position centrale neutre auquel cas l'électronique de bord arrête les opérations de déploiement des roues 2, 3 et les reprend lorsque l'opérateur pousse à nouveau le levier vers le haut. Le fonctionnement est le même lorsque l'opérateur pousse le levier de l'interrupteur vers le bas pour passer les roues 2, 3 en position rétractée. Ce fonctionnement procure une sécurité par rapport au caractère automatique des opérations de déploiement ou de rétractation des roues. En effet, il suffit à l'opérateur de relâcher l'organe de commande 210 pour arrêter les opérations de déploiement ou de rétractation des roues 2, 3 s'il perçoit un risque quelconque de collision des roues 2, 3 ou des bras 4, 5 avec un obstacle ou une personne. De plus, l'opérateur lui-même est protégé contre le risque de collision par les roues 2, 3 ou les bras 4, 5 du fait qu'il doit rester en permanence au niveau du pupitre de commande 200 pendant l'exécution de ces opérations. Par ailleurs, l'électronique de bord est de préférence prévue pour empêcher le levage d'une plate-forme de travail de la nacelle élévatrice dans le cas où les roues 2, 3 ne sont pas toutes dans la position déployée extrémale. Si l'exécution des opérations de déploiement ou de rétractation des roues est interrompue par l'électronique de bord du fait du relâchement de la commande par l'opérateur et que les roues ne sont pas toutes dans la position déployée extrémale, alors l'électronique de bord enclenche une signalisation informant l'opérateur que le levage de la plate-forme de travail est empêché, par exemple sur l'écran 220 mentionné plus loin.

Un marquage 211, respectivement 213, apposée au-dessus, respectivement en-dessous, de l'interrupteur symbolise la position déployée, respectivement rétractée, des roues 2, 3 et des bras 4, 5. Le marquage supérieur 211, respectivement inférieur 213, est complété par des flèches pointant dans la direction de déploiement, respectivement de rétractation, des roues 2, 3 et des bras 4, 5.

Un voyant lumineux 212, respectivement 214, est agencé au niveau du marquage supérieur 211, respectivement inférieur 213. Lorsque les roues 2, 3 sont en position déployée, respectivement repliée, le voyant 212, respectivement 214, est allumée de manière continue. Ainsi l'opérateur est informé de la position actuelle des roues 2, 3.

Lorsque l'opérateur actionne l'organe de commande 210 pour provoquer le déploiement, respectivement la rétractation, des roues 2, 3, l'électronique de bord allume de manière clignotante le voyant 212, respectivement 214.

Le pupitre de commande 200 comprend aussi un écran d'affichage 220. Lorsque l'opérateur actionne l'organe de commande 210, l'électronique de bord y fait afficher une mention indiquant que les opérations de déploiement ou de rétractation des roues 2,3 sont en cours, ainsi qu'une animation graphique du châssis 221 montrant la progression des opérations de déploiement ou de rétraction des roues 2, 3 et des bras 4, 5. Il y affiche en outre une barre de progression 222 qui augmente ou diminue de longueur au fur et à mesure des opérations de déploiement ou rétractation des roues 2, 3. Lorsque les opérations de déploiement ou de rétraction des roues 2, 3 sont terminées, l'électronique de bord fait afficher un message correspondant sur l'écran 220.

Lorsque les roues 2, 3 sont en position repliée sans actionnement de l'organe de commande 210, l'électronique de bord affiche sur l'écran 220 une information indiquant que le levage de la plate-forme de travail 30 n'est pas possible.

L'on comprendra que l'organe de commande 210 peut être d'un type différent. Par exemple, il peut être prévu deux interrupteurs distincts, l'un pour provoquer le déploiement des roues 2, 3 et l'autre la rétractation des roues 2, 3. Selon un autre exemple, le lancement des opérations de déploiement ou de rétractation des roues 2, 3 peut se faire par contact tactile sur un affichage dédié sur l'écran d'affichage 220.

Il est également possible de prévoir le lancement à distance des opérations de déploiement ou de rétractation des roues, par exemple au moyen d'un *smartphone* en liaison de communication sans fil avec l'électronique de bord de la nacelle élévatrice 1. Des affichages similaires à ceux de l'écran 220 peuvent être prévus sur l'écran du *smartphone.*

Suivant une variante, l'électronique de bord peut être prévue pour, en cas de relâchement de l'organe de commande 210 par l'opérateur pendant l'exécution des étapes 120 et avant que la position rétractée ou déployée extrémale des roues 2, 3 ait été atteinte, poursuivre l'exécution des opérations de déploiement ou rétractation jusqu'à une position finale modifiée des roues 2, 3 qui est intermédiaire entre la position rétractée extrémale et la position déployée extrémale. Si l'électronique de bord poursuit l'exécution du procédé jusqu'à une position finale modifiée des roues qui est intermédiaire entre la position rétractée extrémale et la position déployée extrémale, alors l'électronique de bord empêche de préférence le levage de la plate-forme de travail 30 ou bien limite une hauteur maximale à laquelle l'opérateur peut lever la plate-forme de travail 30 par rapport au cas où les roues 2, 3 sont toutes dans la position déployée extrémale.

Bien entendu, la présente invention n'est pas limitée aux exemples et au mode de réalisation décrits et représentés, mais elle est susceptible de nombreuses variantes accessibles à l'homme de l'art.

## Revendications

1. Procédé mis en œuvre par une électronique de bord d'une nacelle élévatrice (1) pour déplacer une paire de roues avant (2) et une paire de roues arrière (3) de la nacelle élévatrice (1) entre une position initiale et une position finale dont l'une correspond à une position rétractée et l'autre à une position déployée,
la nacelle élévatrice reposant au sol par le biais des roues (2, 3) avec un écartement de la paire de roues avant (2) et un écartement (d ; D) de la paire de roues arrière (3) qui sont supérieurs dans la position déployée par rapport à la position rétractée,
la nacelle élévatrice comprenant un châssis (10) et quatre bras (4, 5) supportant chacun l'une respective des roues (2, 3), chacune des roues étant montée à une première extrémité du bras correspondant dont une deuxième extrémité distale est montée pivotante au châssis (10) pour déplacer la roue entre la position rétractée et la position déployée le long d'une trajectoire (T₄, T₄', T₅, T₅') de pivotement du bras,
chacune des roues (2, 3) ayant une direction de roulement au sol modifiable par un changement commandé d'orientation de la roue par rapport au bras correspondant (4 ; 5),
le procédé comprenant pour chaque roue (2, 3) les étapes successives suivantes :
a) changement d'orientation de la roue par rapport au bras correspondant pour avoir une orientation tangentielle à la trajectoire de pivotement du bras correspondant,
b) déplacement de la roue de la position initiale à la position finale par actionnement en pivotement du bras correspondant, un éventuel système de freinage de la roue étant inactif durant le déplacement et la roue étant maintenue orientée tangentiellement à la trajectoire de pivotement du bras durant le déplacement, et optionnellement
c) commande d'un changement d'orientation de la roue par rapport au bras correspondant de manière que, après exécution de l'étape c) pour toutes les roues, les roues aient toutes une direction de roulement qui corresponde à une direction commune de déplacement de la nacelle élévatrice au sol,
dans lequel l'exécution des étapes a), b) et le cas échéant c) pour l'ensemble des roues (2, 3) est désynchronisée de manière que, à tout moment depuis le début de l'étape a) jusqu'à la fin de l'étape b) ou le cas échéant de l'étape c) pour l'ensemble des roues, au moins l'une des modalités suivantes soient satisfaites :
- le système de frein d'au moins une roue (2, 3) est actif,
- au moins une roue (2, 3) est soumise à un entrainement motorisé en rotation,
- l'orientation relative des roues (2, 3) entre elles empêche toute translation de la nacelle élévatrice (1) au sol sous l'effet de la gravité,
**caractérisé en ce que** :
- l'étape b) est lancée de manière synchronisée pour une première paire de roues ;
- l'étape b) est lancée de manière synchronisée pour une deuxième paire de roues, la deuxième paire de roues étant formée par les roues autres que les deux roues formant la première paire de roues ; et
- l'étape b) est lancée pour la deuxième paire de roues avec un décalage dans le temps par rapport à la première paire de roues.

2. Procédé selon la revendication 1, dans lequel l'exécution des étapes a), b) et le cas échéant c) pour l'ensemble des roues (2, 3) est désynchronisée de manière que, à tout moment depuis le début de l'étape a) jusqu'à la fin de l'étape b) ou le cas échéant c), au moins l'une des modalités suivantes soient satisfaites :
- le système de frein d'au moins deux roues (2, 3) est actif,
- au moins deux roues (2, 3) sont soumis à un entrainement motorisé en rotation,
- l'orientation relative des roues (2, 3) entre elles empêche toute translation de la nacelle élévatrice (1) au sol sous l'effet de la gravité.

3. Procédé selon la revendication 1 ou 2, dans lequel l'étape a) est lancée pour chacune des roues avant que l'exécution de l'étape b) ne soit terminée pour l'une quelconque des autres roues.

4. Procédé selon la revendication 3, dans lequel l'exécution de l'étape b) pour chacune des roues se chevauche au moins partiellement dans le temps avec l'exécution de l'étape b) pour les autres roues.

5. Procédé selon l'une quelconque des revendications 1 à 4, dans lequel la position initiale et la position finale correspondent l'une à une position rétractée extrémale et l'autre à une position déployée extrémale.

6. Procédé selon l'une quelconque des revendications 1 à 5, dans lequel :
- l'étape b) est exécutée de manière synchronisée pour la première paire de roues ; et
- l'étape b) est exécutée de manière synchronisée pour la deuxième paire de roues.

7. Procédé selon l'une quelconque des revendications 1 à 6, dans lequel l'actionnement en pivotement du bras (4, 5) lors de l'étape b) se fait :
- au moyen d'un actionneur dédié à l'actionnement d'un ou plusieurs bras (4, 5), et/ou
- par entrainement motorisé en rotation de la roue (2, 3) correspondant au bras.

8. Procédé selon la revendication 7, dans lequel l'actionnement en pivotement du bras (4, 5) lors de l'étape b) pour au moins l'une des roues (2, 3) comprend ou consiste en un entrainement motorisé en rotation de la roue (2, 3) correspondant au bras.

9. Procédé selon l'une quelconque des revendications 1 à 8, dans lequel pour une roue :
- un changement de direction de roulement au sol par rapport au bras correspondant s'opère par un pivotement de la roue par rapport à un axe de pivotement qui est décalé par rapport à un plan médian de la roue perpendiculaire à l'axe de rotation de cette roue, et
- le changement d'orientation de la roue par rapport au bras correspondant de l'étape a) et/ou de l'étape c) est obtenu ou assisté par un entrainement motorisé en rotation de la roue.

10. Procédé selon l'une quelconque des revendications 1 à 9, lequel est mis en œuvre par l'électronique de bord sur actionnement d'au moins une commande par un opérateur, dans lequel l'exécution du procédé est poursuivie par l'électronique de bord jusqu'à une position finale des roues (2, 3) correspondant à une position rétractée ou déployée extrémale tant que l'actionnement de la commande est maintenu par l'opérateur et est interrompue par l'électronique de bord en cas de relâchement de la commande par l'opérateur avant que la position rétractée ou déployée extrémale des roues (2, 3) ait été atteinte.

11. Procédé selon la revendication 10, dans lequel l'électronique de bord empêche le levage d'une plate-forme de travail de la nacelle élévatrice dans le cas où les roues (2, 3) ne sont pas toutes dans la position déployée extrémale.

12. Procédé selon la revendication 11, dans lequel, si l'exécution du procédé est interrompue par l'électronique de bord du fait du relâchement de la commande par l'opérateur et que les roues (2, 3) ne sont pas toutes dans la position déployée extrémale, alors l'électronique de bord enclenche une signalisation informant l'opérateur que le levage de la plate-forme de travail est empêché.

13. Procédé selon l'une quelconque des revendications 1 à 9, lequel est mis en œuvre par l'électronique de bord sur actionnement d'au moins une commande par un opérateur, dans lequel l'exécution du procédé est poursuivie par l'électronique de bord jusqu'à une position finale des roues (2, 3) correspondant à une position rétractée ou déployée extrémale tant que l'actionnement de la commande est maintenu par l'opérateur et en cas de relâchement de la commande par l'opérateur pendant l'exécution de l'étape b) pour chacune des roues avant que la position rétractée ou déployée extrémale des roues (2, 3) ait été atteinte, l'électronique de bord poursuit l'exécution du procédé jusqu'à une position finale modifiée des roues (2, 3) qui est intermédiaire entre la position rétractée extrémale et la position déployée extrémale.

14. Procédé selon la revendication 13, dans lequel si l'électronique de bord poursuit l'exécution du procédé jusqu'à une position finale modifiée des roues (2, 3) qui est intermédiaire entre la position rétractée extrémale et la position déployée extrémale, alors l'électronique de bord empêche en outre le levage d'une plate-forme de travail de la nacelle élévatrice ou bien limite une hauteur maximale à laquelle l'opérateur peut lever la plate-forme de travail par rapport au cas où les roues sont toutes dans la position déployée extrémale.

15. Nacelle élévatrice (1), comprenant :
- un châssis,
- une plate-forme de travail,
- une structure de levage montée sur le châssis et supportant la plate-forme de travail pour la lever en hauteur,
- une paire de roues avant (2) et une paire de roues arrière (3) déplaçables entre une position rétractée et une position déployée, la nacelle élévatrice reposant au sol par le biais des roues (2, 3) avec un écartement de la paire de roues avant (2) et un écartement (d ; D) de la paire de roues arrière (3) qui sont supérieurs dans la position déployée par rapport à la position rétractée,
- une électronique de bord,
- quatre bras (4, 5) supportant chacun l'une respective des roues (2, 3), chacune des roues étant montée à une première extrémité du bras correspondant dont une deuxième extrémité distale est montée pivotante au châssis (10) pour déplacer la roue entre la position rétractée et la position déployée le long d'une trajectoire (T4, T4', T5, T5') de pivotement du bras, chacune des roues (2, 3) ayant une direction de roulement au sol modifiable par un changement d'orientation de la roue par rapport au bras correspondant (4 ; 5), l'électronique de bord étant prévue pour commander un changement d'orientation de la roue par rapport au bras correspondant (4 ; 5), et
- un système de freinage pour au moins deux des roues (2, 3) et qui est prévu pour être commandé par l'électronique de bord,
dans laquelle pour chacune des roues (2, 3), il est prévu que la roue est motrice, l'entrainement motorisé en rotation de la roue pouvant être commandé par l'électronique de bord, et/ou que le bras correspondant est actionnable en pivotement par un dispositif d'actionnement de la nacelle élévatrice, et
dans laquelle l'électronique de bord est configurée pour mettre en œuvre le procédé selon l'une quelconque des revendications 1 à 14.

## Patentansprüche

1. Verfahren, von einer Bordelektronik einer Hebebühne (1) durchgeführt, um ein Paar Vorderräder (2) und ein Paar Hinterräder (3) der Hebebühne (1) zwischen einer Ausgangsposition und einer Endposition zu bewegen, von denen eine einer eingefahrenen Position und die andere einer ausgefahrenen Position entspricht, wobei die Hebebühne über die Räder (2, 3) auf dem Boden aufliegt, wobei ein Abstand des Paars Vorderräder (2) und ein Abstand (d; D) des Paars Hinterräder (3) in der ausgefahrenen Position größer sind als in der eingefahrenen Position, wobei die Hebebühne einen Rahmen (10) und vier Arme (4, 5) umfasst, die jeweils eines der Räder (2, 3) tragen, wobei jedes der Räder an einem ersten Ende des entsprechenden Arms montiert ist, von dem ein zweites distales Ende schwenkbar an dem Rahmen (10) montiert ist, um das Rad zwischen der eingefahrenen Position und der ausgefahrenen Position entlang einer Schwenkbahn (T₄, T₄', T₅, T₅') des Arms zu bewegen,
wobei jedes der Räder (2, 3) eine Rollrichtung auf dem Boden aufweist, die durch eine gesteuerte Änderung der Ausrichtung des Rads in Bezug auf den entsprechenden Arm (4; 5) veränderbar ist,
wobei das Verfahren für jedes Rad (2, 3) die folgenden aufeinanderfolgenden Schritte umfasst:
a) Ändern der Ausrichtung des Rads in Bezug auf den entsprechenden Arm, um eine Ausrichtung tangential zu der Schwenkbahn des entsprechenden Arms aufzuweisen,
b) Bewegen des Rads von der Ausgangsposition zu der Endposition durch Schwenkbetätigung des entsprechenden Arms, wobei ein gegebenenfalls vorhandenes Bremssystem des Rads während der Bewegung inaktiv ist und das Rad während der Bewegung tangential zu der Schwenkbahn des Arms ausgerichtet gehalten wird, und optional
c) Steuern einer Änderung der Ausrichtung des Rads in Bezug auf den entsprechenden Arm, so dass nach dem Ausführen von Schritt c) für alle Räder die Räder insgesamt eine gemeinsame Rollrichtung aufweisen, einer Bewegungsrichtung der Hubarbeitsbühne auf dem Boden entsprechend,
wobei das Ausführen der Schritte a), b) und gegebenenfalls c) für alle Räder (2, 3) asynchron erfolgt, damit zu jedem Zeitpunkt von dem Beginn von Schritt a) bis zu dem Ende von Schritt b) oder gegebenenfalls von Schritt c) für alle Räder mindestens eine der folgenden Bedingungen erfüllt ist:
- das Bremssystem von mindestens einem Rad (2, 3) ist aktiv,
- mindestens ein Rad (2, 3) unterliegt einem motorisierten Drehantrieb,
- die relative Ausrichtung der Räder (2, 3) untereinander verhindert jedwede schwerkraftbedingte Translation der Hebebühne (1) auf dem Boden,
**dadurch gekennzeichnet, dass**:
- Schritt b) für ein erstes Paar Räder synchron gestartet wird;
- Schritt b) für ein zweites Paar Räder synchron gestartet wird, wobei das zweite Paar Räder von anderen Rädern als den zwei Rädern gebildet wird, die das erste Paar Räder bilden; und
- Schritt b) für das zweite Paar Räder mit einem Zeitversatz in Bezug auf das erste Paar Räder gestartet wird.

2. Verfahren nach Anspruch 1, bei welchem das Ausführen der Schritte a), b) und gegebenenfalls c) für alle Räder (2, 3) asynchron erfolgt, damit zu jedem Zeitpunkt von dem Beginn von Schritt a) bis zu dem Ende von Schritt b) oder gegebenenfalls c) mindestens eine der folgenden Bedingungen erfüllt ist:
- das Bremssystem von mindestens zwei Rädern (2, 3) ist aktiv,
- mindestens zwei Räder (2, 3) unterliegen einem motorisierten Drehantrieb,
- die relative Ausrichtung der Räder (2, 3) untereinander verhindert jedwede schwerkraftbedingte Translation der Hubarbeitsbühne (1) auf dem Boden.

3. Verfahren nach Anspruch 1 oder 2, bei welchem Schritt a) für jedes der Räder gestartet wird, bevor das Ausführen von Schritt b) für eines der anderen Räder beendet wurde.

4. Verfahren nach Anspruch 3, bei welchem das Ausführen von Schritt b) für jedes der Räder mindestens teilweise zeitlich mit dem Ausführen von Schritt b) für die anderen Räder überlappt.

5. Verfahren nach einem der Ansprüche 1 bis 4, bei welchem die Ausgangsposition und die Endposition einer am weitesten eingefahrenen Position und die andere einer am weitesten ausgefahrenen Position entsprechen.

6. Verfahren nach einem der Ansprüche 1 bis 5, bei welchem:
- Schritt b) für das erste Paar Räder synchron ausgeführt wird; und
- Schritt b) für das zweite Paar Räder synchron ausgeführt wird.

7. Verfahren nach einem der Ansprüche 1 bis 6, bei welchem die Schwenkbetätigung des Arms (4, 5) in Schritt b) erfolgt:
- mittels eines für die Betätigung eines oder mehrerer Arme (4, 5) bestimmten Aktuators, und/oder
- durch motorisierten Drehantrieb des dem Arm entsprechenden Rads (2, 3).

8. Verfahren nach Anspruch 7, bei welchem die Schwenkbetätigung des Arms (4, 5) in Schritt b) für mindestens eines der Räder (2, 3) einen motorisierten Drehantrieb des dem Arm entsprechenden Rads (2, 3) umfasst oder daraus besteht.

9. Verfahren nach einem der Ansprüche 1 bis 8, bei welchem für ein Rad:
- eine Änderung der Rollrichtung auf dem Boden in Bezug auf den entsprechenden Arm durch ein Schwenken des Rads in Bezug auf eine Schwenkachse erfolgt, die in Bezug auf eine Mittelebene des Rads senkrecht zu der Drehachse dieses Rads versetzt ist, und
- die Änderung der Ausrichtung des Rads in Bezug auf den entsprechenden Arm von Schritt a) und/oder Schritt c) durch einen motorisierten Drehantrieb des Rads erreicht oder unterstützt wird.

10. Verfahren nach einem der Ansprüche 1 bis 9, von der Bordelektronik bei Betätigung mindestens einer Steuerung durch einen Bediener durchgeführt, bei welchem das Ausführen des Verfahrens von der Bordelektronik bis zu einer Endposition der Räder (2, 3), die einer am meisten eingefahrenen oder ausgefahrenen Position entspricht, fortgesetzt wird, solange die Betätigung der Steuerung durch den Bediener aufrechterhalten wird, und von der Bordelektronik im Fall der Freigabe beziehungsweise des Loslassens der Steuerung durch den Bediener unterbrochen wird, bevor die am meisten eingefahrene oder ausgefahrene Position der Räder (2, 3) erreicht wurde.

11. Verfahren nach Anspruch 10, bei welchem die Bordelektronik das Anheben einer Arbeitsplattform der Hebebühne in dem Fall verhindert, in dem die Räder (2, 3) nicht alle in der am weitesten ausgefahrenen Position vorliegen.

12. Verfahren nach Anspruch 11, bei welchem, wenn das Ausführen des Verfahrens von der Bordelektronik aufgrund der Freigabe beziehungsweise des Loslassens der Steuerung durch den Bediener unterbrochen wird und die Räder (2, 3) nicht alle in der am weitesten ausgefahrenen Position sind, die Bordelektronik eine Signalisierung auslöst, die den Bediener informiert, dass das Anheben der Arbeitsplattform verhindert ist/wird.

13. Verfahren nach einem der Ansprüche 1 bis 9, von der Bordelektronik bei Betätigung mindestens einer Steuerung durch einen Bediener durchgeführt, bei welchem das Ausführen des Verfahrens von der Bordelektronik bis zu einer Endposition der Räder (2, 3), die einer am meisten eingefahrenen oder ausgefahrenen Position entspricht, fortgesetzt wird, solange die Betätigung der Steuerung durch den Bediener aufrechterhalten wird, und im Fall der Freigabe beziehungsweise des Loslassens der Steuerung durch den Bediener während des Ausführens von Schritt b) für jedes der Räder, bevor die am meisten eingefahrene oder ausgefahrene Position der Räder (2, 3) erreicht wurde, die Bordelektronik das Ausführen des Verfahrens bis zu einer modifizierten Endposition der Räder (2, 3), die zwischen der am meisten eingefahrenen Position und der am meisten ausgefahrenen Position liegt, fortsetzt.

14. Verfahren nach Anspruch 13, bei welchem, wenn die Bordelektronik das Ausführen des Verfahrens bis zu einer modifizierten Endposition der Räder (2, 3), die zwischen der am meisten eingefahrenen Position und der am meisten ausgefahrenen Position liegt, fortsetzt, die Bordelektronik dann auch das Anheben einer Arbeitsplattform der Hubarbeitsbühne verhindert oder eine maximale Höhe begrenzt, auf die der Bediener die Arbeitsplattform in Bezug auf den Fall anheben kann, in dem die Räder alle in der am meisten ausgefahrenen Position sind.

15. Hebebühne (1), umfassend:
- einen Rahmen,
- eine Arbeitsplattform,
- eine Hebestruktur, die an dem Rahmen montiert ist und die Arbeitsplattform trägt, um sie in der Höhe anzuheben,
- ein Paar Vorderräder (2) und ein Paar Hinterräder (3), die zwischen einer eingefahrenen Position und einer ausgefahrenen Position beweglich sind, wobei die Hubarbeitsbühne über die Räder (2, 3) auf dem Boden aufliegt, wobei ein Abstand des Paars Vorderräder (2) und ein Abstand (d; D) des Paars Hinterräder (3) in der ausgefahrenen Position größer sind als in der eingefahrenen Position,
- eine Bordelektronik,
- vier Arme (4, 5), die jeweils eines der Räder (2, 3) tragen, wobei jedes der Räder an einem ersten Ende des entsprechenden Arms montiert ist, von dem ein zweites distales Ende schwenkbar an dem Rahmen (10) montiert ist, um das Rad zwischen der eingefahrenen Position und der ausgefahrenen Position entlang einer Schwenkbahn (T4, T4', T5, T5') des Arms zu bewegen, wobei jedes der Räder (2, 3) eine Rollrichtung auf dem Boden aufweist, die durch eine Änderung der Ausrichtung des Rads in Bezug auf den entsprechenden Arm (4; 5) veränderbar ist, wobei die Bordelektronik dazu ausgelegt ist, eine Änderung der Ausrichtung des Rads in Bezug auf den entsprechenden Arm (4; 5) zu steuern, und
- ein Bremssystem für mindestens zwei der Räder (2, 3), eingerichtet zur Steuerung durch die Bordelektronik gesteuert,
bei welcher für jedes der Räder (2, 3) vorgesehen ist, dass das Rad angetrieben ist/wird, wobei der motorisierte Drehantrieb des Rads von der Bordelektronik gesteuert werden kann, und/oder dass der entsprechende Arm durch eine Betätigungsvorrichtung der Hebebühne schwenkbar betätigt werden kann, und
bei welcher die Bordelektronik dazu ausgelegt ist, das Verfahren nach einem der Ansprüche 1 bis 14 durchzuführen.

## Claims

1. A method implemented by on-board electronics of an aerial work platform (1) for moving a pair of front wheels (2) and a pair of rear wheels (3) of the aerial work platform (1) between an initial position and an end position, one of which corresponds to a retracted position and the other to an extended position,
the aerial work platform resting on the ground via the wheels (2, 3) with a spacing between the pair of front wheels (2) and a spacing (d; D) between the pair of rear wheels (3) that is greater in the extended position than in the retracted position,
the aerial work platform comprising a chassis (10) and four arms (4, 5) each supporting a respective one of the wheels (2, 3), each of the wheels being mounted at a first end of the corresponding arm, a second distal end of which is pivotally mounted to the chassis (10) to move the wheel between the retracted position and the extended position along a pivoting path (T4, T4', T5, T5') of the arm,
each of the wheels (2, 3) having a ground rolling direction modifiable by a controlled change of orientation of the wheel with respect to the corresponding arm (4; 5),
the method comprising for each wheel (2, 3) the following successive steps:
a) changing the orientation of the wheel with respect to the corresponding arm to have an orientation tangential to the pivoting path of the corresponding arm,
b) moving the wheel from the initial position to the end position by actuating the corresponding arm to pivot, a possible braking system of the wheel being inactive during the movement and the wheel being kept oriented tangentially to the pivoting path of the arm during the movement, and optionally
c) controlling a change in orientation of the wheel with respect to the corresponding arm so that, after execution of step c) for all the wheels, the wheels all have a rolling direction that corresponds to a common direction of travel of the aerial work platform on the ground,
wherein the execution of steps a), b) and if applicable c) for all the wheels (2, 3) is desynchronized so that at any time from the beginning of step a) until the end of step b) or if applicable step c) for all the wheels, at least one of the following conditions is satisfied:
- the brake system of at least one wheel (2, 3) is active,
- at least one wheel (2, 3) is subject to a motorized rotation drive,
- the relative orientation of the wheels (2, 3) with respect to each other prevents any translation of the aerial work platform (1) on the ground under the effect of gravity,
**characterized in that**:
- step b) is initiated synchronously for a first pair of wheels;
- step b) is initiated synchronously for a second pair of wheels, the second pair of wheels being formed by the wheels other than the two wheels forming the first pair of wheels; and
- step b) is initiated for the second pair of wheels with a time shift with respect to the first pair of wheels.

2. The method according to claim 1, wherein the execution of steps a), b) and if applicable c) for all the wheels (2, 3) is desynchronized so that at any time from the beginning of step a) until the end of step b) or if applicable c), at least one of the following conditions is satisfied:
- the brake system of at least two wheels (2, 3) is active,
- at least two wheels (2, 3) are subject to a motorized rotation drive,
- the relative orientation of the wheels (2, 3) with respect to each other prevents any translation of the aerial work platform (1) on the ground under the effect of gravity.

3. The method according to claim 1 or 2, wherein step a) is initiated for each of the wheels before the execution of step b) is completed for any of the other wheels.

4. The method according to claim 3, wherein the execution of step b) for each of the wheels at least partially overlaps in time with the execution of step b) for the other wheels.

5. The method according to any one of claims 1 to 4, wherein the initial position and the end position correspond one to an extreme retracted position and the other to an extreme extended position.

6. The method according to any one of claims 1 to 5, wherein:
- step b) is executed synchronously for the first pair of wheels; and
- step b) is executed synchronously for the second pair of wheels.

7. The method according to any one of claims 1 to 6, wherein the pivotal actuation of the arm (4, 5) in step b) is executed:
- by means of an actuator dedicated to the actuation of one or more arms (4, 5), and/or
- by motorized rotation drive of the wheel (2, 3) corresponding to the arm.

8. The method according to claim 7, wherein the actuation for pivoting the arm (4, 5) in step b) for at least one of the wheels (2, 3) comprises or consists of a motorized rotation drive of the wheel (2, 3) corresponding to the arm.

9. The method according to any one of claims 1 to 8, wherein for a wheel:
- a change in ground rolling direction with respect to the corresponding arm is effected by pivoting the wheel with respect to a pivot axis which is offset with respect to a median plane of the wheel perpendicular to the axis of rotation of this wheel, and
- the change of orientation of the wheel with respect to the corresponding arm of step a) and/or of step c) is achieved or assisted by a motorized rotation drive of the wheel.

10. The method according to any one of claims 1 to 9, which is executed by the on-board electronics upon actuation of at least one control by an operator, wherein the execution of the method is continued by the on-board electronics up to an end position of the wheels (2, 3) corresponding to an extreme retracted or extended position as long as the actuation of the control is maintained by the operator and is interrupted by the on-board electronics if the control is released by the operator before the extreme retracted or extended position of the wheels (2, 3) has been reached.

11. The method according to claim 10, wherein the on-board electronics prevents the lifting of a working platform of the aerial work platform if the wheels (2, 3) are not all in the extreme extended position.

12. The method according to claim 11, wherein, if the execution of the method is interrupted by the on-board electronics due to the operator releasing the control and the wheels (2, 3) are not all in the extreme extended position, then the on-board electronics switches on a signaling informing the operator that the lifting of the working platform is prevented.

13. The method according to any one of claims 1 to 9, which is executed by the on-board electronics upon actuation of at least one control by an operator, wherein the execution of the method is continued by the on-board electronics up to an end position of the wheels (2, 3) corresponding to an extreme retracted or extended position as long as the actuation of the control is maintained by the operator, and if the control is released by the operator during the execution of step b) for each of the wheels before the extreme retracted or extended position of the wheels (2, 3) has been reached, the on-board electronics continue the execution of the method up to a modified end position of the wheels (2, 3) which is intermediate between the extreme retracted position and the extreme extended position.

14. The method according to claim 13, wherein if the on-board electronics continues the execution of the method up to a modified end position of the wheels (2, 3) that is intermediate between the extreme retracted position and the extreme extended position, then the on-board electronics further prevents the lifting of a working platform of the aerial work platform or limit a maximum height to which the operator can lift the working platform with respect to the case when the wheels are all in the extreme extended position.

15. An aerial work platform (1), comprising:
- a chassis,
- a working platform,
- a lifting structure mounted on the chassis and supporting the working platform for lifting it to height,
- a pair of front wheels (2) and a pair of rear wheels (3) movable between a retracted position and an extended position, the aerial work platform resting on the ground via the wheels (2, 3) with a spacing between the pair of front wheels (2) and a spacing (d; D) between the pair of rear wheels (3) that are greater in the extended position than in the retracted position,
- on-board electronics,
- four arms (4, 5) each supporting a respective one of the wheels (2, 3), each of the wheels being mounted at a first end of the corresponding arm, a second distal end of which is pivotally mounted to the chassis (10) to move the wheel between the retracted position and the extended position along a pivoting path (T4, T4', T5, T5') of the arm, each of the wheels (2, 3) having a ground rolling direction modifiable by a change of orientation of the wheel with respect to the corresponding arm (4; 5), the on-board electronics being provided to control a change of orientation of the wheel with respect to the corresponding arm (4; 5), and
- a braking system for at least two of the wheels (2, 3) which is provided to be controlled by the on-board electronics,
wherein for each of the wheels (2, 3) it is provided that the wheel is driven, the motorized rotation drive of the wheel being controllable by the on-board electronics, and/or that the associated arm can be actuated to pivot by an actuating device of the aerial work platform, and
wherein the on-board electronics is configured to carry out the method according to any one of claims 1 to 14.
